# FASCICULE DE BREVET EUROPEEN

(11) **EP 3 178 183 B1**
(45) Date de publication et mention de la délivrance du brevet: **19.02.2020**
(21) Numéro de dépôt: 15759868.1
(22) Date de dépôt: 27.07.2015
(51) Int. Cl.: H04J 14/02, H04Q 11/00, H04B 10/50, H04B 10/548

(54) **SIGNAL OPTIQUE COMPRENANT UNE SUCCESSION DE RAFALES MULTI-BANDES DE SIGNAUX MULTI-PORTEUSES DE DONNÉES, SYSTÈME ET PROCÉDÉ D'ÉMISSION D'UN TEL SIGNAL, ET RÉSEAU DE TRANSPORT OPTIQUE CORRESPONDANT**
OPTISCHES SIGNAL MIT EINER REIHE VON MEHRBANDIGEN BURSTS VON MEHRTRÄGERDATENSIGNALEN, SYSTEM UND VERFAHREN ZUR EMISSION SOLCH EINES SIGNALS UND ZUGEHÖRIGES OPTISCHES TRANSPORTNETZWERK
OPTICAL SIGNAL COMPRISING A SUCCESSION OF MULTI-BAND BURSTS OF MULTI-CARRIER DATA SIGNALS, SYSTEM AND METHOD OF EMISSION OF SUCH A SIGNAL, AND CORRESPONDING OPTICAL TRANSPORT NETWORK

(30) Priorité: 04.08.2014 FR 1457580
(43) Date de publication de la demande: 14.06.2017
(73) Titulaire: Orange, 75015 Paris (FR)
(72) Inventeur: GAVIGNET, Paulette, F-22730 Trégastel (FR); PINCEMIN, Erwan, F-22290 Gommenec'h (FR); LE ROUZIC, Esther, F-22560 Trébeurden (FR)
(74) Mandataire: Vidon Brevets & Stratégie
(86) Numéro de dépôt international: PCT/FR2015/052082
(87) Numéro de publication internationale: WO 2016/020602

(56) Documents cités:
- EP-A1- 2 693 671
- US-A1- 2009 226 169
- FABREGA J M ET AL: "Experimental demonstration of elastic optical networking utilizing time-sliceable bitrate variable OFDM transceiver", OFC 2014, OSA, 9 mars 2014 (2014-03-09), pages 1-3, XP032633369, DOI: 10.1109/OFC.2014.6886913 cité dans la demande
- PINCEMIN ERWAN ET AL: "Multi-Band OFDM Transmission at 100 Gbps With Sub-Band Optical Switching", JOURNAL OF LIGHTWAVE TECHNOLOGY, IEEE SERVICE CENTER, NEW YORK, NY, US, vol. 32, no. 12, 15 juin 2014 (2014-06-15) , pages 2202-2219, XP011550378, ISSN: 0733-8724, DOI: 10.1109/JLT.2014.2322517 [extrait le 2014-06-06]
- KAISER R ET AL: "OPTOELECTRONIC/PHOTONIC INTEGRATED CIRCUITS ON INP BETWEEN TECHNOLOGICAL FEASIBILITY AND COMMERCIAL SUCCESS", IEICE TRANSACTIONS ON ELECTRONICS, INSTITUTE OF ELECTRONICS, TOKYO, JP, vol. E85-C, no. 4, 1 avril 2002 (2002-04-01), pages 970-981, XP001117301, ISSN: 0916-8524
- MARTIJN J R HECK ET AL: "Integrated Fourier-Domain Mode-Locked Lasers: Analysis of a Novel Coherent Comb Laser", IEEE JOURNAL OF SELECTED TOPICS IN QUANTUM ELECTRONICS, IEEE SERVICE CENTER, PISCATAWAY, NJ, US, vol. 18, no. 1, 1 janvier 2012 (2012-01-01), pages 201-209, XP011398894, ISSN: 1077-260X, DOI: 10.1109/JSTQE.2011.2113371
- SHIOZAWA T ET AL: "RAPID WAVELENGTH STABILISING CONTROL FOR FAST LD WAVELENGTH SWITCHING", ELECTRONICS LETTERS, IEE STEVENAGE, GB, vol. 29, no. 15, 22 juillet 1993 (1993-07-22), pages 1331-1332, XP000385658, ISSN: 0013-5194

## Description

### 1. Domaine de l'invention

Le domaine de l'invention est celui des réseaux de communications optiques. Plus précisément, l'invention concerne l'amélioration de l'utilisation des ressources réseau dans de tels réseaux optiques.

### 2. Art antérieur et ses inconvénients

La croissance exponentielle du volume des données échangées au sein des réseaux de communication optiques impose une augmentation sans cesse croissante du débit des interfaces de transmission, qui atteignent aujourd'hui 100 Gbit/s et plus.

La contrepartie de cette augmentation du débit des interfaces est que le remplissage des canaux de transmission peut être relativement inefficace si ce n'est au travers d'une agrégation électronique coûteuse en interfaces de conversion optique-électrique-optique (O-E-O) et peu économe en énergie.

Il existe cependant deux solutions optiques qui permettent d'accéder à la granularité sous la longueur d'onde conduisant ainsi à une meilleure utilisation des ressources en remplissant plus efficacement les canaux de transmission. La première utilise le domaine temporel : il s'agit de la solution SLPSN (Sub-Lambda Photonically Switched Networks) telle que décrite notamment dans "Terms and definitions for Sub-Lambda Photonically Switched Networks", ITU, COM15-C2322 Rev.-E, Genève, Août 2012 ; la seconde utilise le domaine spectral, il s'agit de l'OFDM multi-bandes (Orthogonal Frequency Division Multiplexing), tel que décrit notamment par E. Pincemin et al., dans "Multi-band OFDM Transmission with Sub-band Optical Switching,", Proc. ECOC 2013*,* invited paper Th.2.A.1 (2013).

### 2.1 Les solutions SLPSN et leurs inconvénients

Les solutions SLPSN (« Sub-Lambda Photonically Switched Networks » pour « réseaux à commutation photonique sous la longueur d'onde ») ont ainsi été identifiées comme permettant non seulement l'utilisation efficace de la ressource de transport mais également comme une solution de partage des interfaces dans les réseaux cœur et métropolitain dans le domaine optique.

Ces solutions reposent sur la commutation photonique de tranches temporelles de longueurs d'onde appelées rafales (en anglais « bursts »), slots ou plus généralement SLPS Units (SLPSU). De ce fait, les solutions SLPSN se démarquent des techniques TDM (pour « Time Division Multiplexing » ou multiplexage temporel) telles que OTN/SDH (pour « Optical Transport Network/Synchronous Digital Hierarchy ») mais aussi des techniques paquets (ATM (pour « Asynchronous Transfer Mode »), Ethernet, IP (pour « Internet Protocol »), ...) qui opèrent cette commutation dans le domaine électrique. Elles se démarquent également des solutions Optical Circuit Switching (OCS), qui réalisent la commutation de longueurs d'onde entières, pour de très longues durées et avec des temps de commutation/reconfiguration lents (de l'ordre de la dizaine de millisecondes).

L'agrégation optique réalisée avec les solutions SLPSN permet en effet de bénéficier du multiplexage statistique et ainsi obtenir un remplissage efficace des longueurs d'onde.

Le concept initial de commutation optique de rafales de données ou "Optical Burst Switching" (OBS) a été introduit en 1999 par C.M. Qiao et al. pour compenser le manque de flexibilité des réseaux optiques à commutation de circuits et l'immaturité des techniques de commutation de paquets optiques (Optical Packet Switching). Cette solution a notamment été poussée par l'augmentation des volumes de trafic et la généralisation du trafic IP, se traduisant par un trafic de plus en plus sporadique ("bursty") de nature « paquet ».

Contrairement à la commutation optique de paquets, la technique OBS consiste à rassembler un certain nombre de paquets destinés au même nœud d'extrémité dans une seule rafale. Cette façon de faire permet d'avoir des rafales de durée plus longue que les paquets IP natifs, et ainsi de relâcher les contraintes techniques (vitesse de traitement) au niveau des nœuds. Comme la durée des rafales reste faible (quelques microsecondes à quelques millisecondes), la technique OBS bénéficie d'un multiplexage statistique significatif qui améliore le remplissage des canaux. De ce point de vue, la technique OBS est un bon compromis entre complexité technique et performance. Mais contrairement à la commutation électronique, la technique OBS ne bénéficie pas de la possibilité d'avoir des mémoires optiques, et contourne ce problème, ou bien en utilisant des méthodes de gestion de contentions de rafales, ou bien en contrôlant finement les périodes d'émission aux sources.

Outre la capacité des rafales optiques à améliorer l'efficacité des réseaux de transport, on espère des techniques SLPSN une réduction forte de la consommation électrique de ces derniers. Cette réduction est justifiée par le fait qu'idéalement, les rafales de données sont aiguillées dans les réseaux SLPSN sans aucun traitement électronique, et que seul le traitement des paquets de contrôle y est éventuellement effectué.

De nombreuses variantes et déclinaisons dérivées de la notion originale OBS ont été proposées dans la littérature. Un critère pertinent pour classer ces différentes déclinaisons de la technique OBS est leur capacité à transmettre avec ou sans pertes de rafales.

Les solutions qui interdisent la perte de rafales sont les seules qui offrent un niveau de qualité de transport satisfaisant pour atteindre des performances compatibles avec les exigences d'un réseau opérationnel.

Parmi les solutions les plus prometteuses, la solution basée sur du routage passif TWIN (pour « Time-domain Wavelength Interleaved Networking », « réseau à longueurs d'onde entrelacées dans le domaine temporel ») telle que décrite dans l'article "Efficient control plane for passive optical burst switching network" de A. Triki et al., ICOIN 2013, pp. 535-540, combine aiguillage en longueur d'onde et planification de l'accès à la longueur d'onde. L'aiguillage en longueur d'onde se base sur la pré-configuration d'arbres de couleur. L'aiguillage d'une rafale est réalisé par exemple par sa coloration à l'émission sur la longueur d'onde correspondant à l'arbre que l'on souhaite emprunter. La rafale est ainsi aiguillée vers la racine (ou destination) de l'arbre. Cette technique d'aiguillage permet d'éviter les dispositifs de commutation rapide dans les nœuds traversés (nœuds cœur du réseau), tandis que la programmation des allocations des longueurs d'onde sur les arbres permet d'utiliser efficacement les ressources optiques (émetteurs, récepteurs, canaux de longueur d'onde) sans aucune perte de collision.

Plus généralement, il existe deux solutions principales pour implémenter des solutions OBS sans perte :
- *accord à la source :* dans ce cas, on associe une longueur d'onde à une destination et la source émet son unité temporelle SLPSU à la longueur d'onde de la destination avec laquelle elle veut communiquer,
- *accord à la réception* : dans ce cas, la source émet toujours ses unités temporelles SLPSU à la même longueur d'onde, et c'est chaque récepteur qui s'accorde à la longueur d'onde des SLPSUs qui lui sont destinés.

En général, chaque nœud source est aussi un nœud destination ; la taille du réseau (nombre de sources/destinations) est donc limitée par le nombre de longueurs d'onde transitant dans le réseau. Les systèmes de transmission WDM (pour « Wavelength Division Multiplexing », « multiplexage en longueur d'onde ») actuellement déployés dans les réseaux transportent environ 80 longueurs d'onde. Il est possible d'augmenter un peu ce nombre en utilisant conjointement les bandes de transmission C (Conventionnelle, de 191,560 à 195,942 THz) et L (Longue, de 184,487 à 191,560 THz) ou en réduisant l'espacement entre canaux. Pour cette deuxième solution cependant, on est limité par le fait que, le débit augmentant, la bande passante des canaux possède une valeur minimale incompressible.

D'autre part, la durée minimale, et donc le quantum de données transmises dans une rafale optique, est de l'ordre de plusieurs microsecondes compte tenu du temps de reconfiguration des différents éléments nécessaires à l'envoi de la rafale (laser accordable, récepteur en mode rafale, ...). Actuellement, pour un débit de 10 Gbit/s par exemple, le nombre de bits dans une rafale de 4,5 µs est de 45000 (soit 5625 octets), ce qui représente plusieurs trames Ethernet. Il est donc nécessaire de construire la rafale en mettant dans des files d'attente, les paquets ou trames devant constituer la rafale. Selon la manière dont sont assemblées les rafales (prise en compte de la qualité de service, fragmentation ou non, taille de rafales fixe ou variable, ...), la construction de la rafale conduit à une latence des paquets/trames, ce qui a un impact négatif sur les services offerts et notamment les services temps réel. Il serait donc intéressant de pouvoir envoyer par exemple une seule trame Ethernet (ou un seul paquet de données) par rafale, avec une adaptation du format de la rafale au format de la trame Ethernet (ou du paquet de données). Ceci pourrait en effet permettre de remplir plus efficacement la rafale (i.e. éviter les trous lors de la constitution de la rafale avec des trames Ethernet), ou d'éviter la fragmentation des trames sur plusieurs rafales (la fragmentation est en effet une solution utilisée pour remplir complètement les rafales, mais qui nécessite des mécanismes complexes pour étiqueter les morceaux de trames/paquets répartis dans différentes rafales et reconstituer les trames/paquets à partir de ces morceaux).

L'augmentation des débits des interfaces à 100 Gbit/s voire plus (requis par les besoins d'augmentation de la capacité par fibre) vont rendre ce conteneur beaucoup plus grand (rafales contenant plus de 56000 octets), accentuant encore ces questions de latence et de remplissage des rafales.

Il existe donc un besoin d'une technique de type OBS permettant d'accéder à des granularités plus petites que les rafales.

### 2.2 La technologie OFDM multi-bandes et ses inconvénients

Une autre solution pour accéder à la granularité sous-longueur d'onde est d'utiliser le format de modulation « Orthogonal Frequency Division Multiplexing » multi-bandes (MB-OFDM) constitué de différentes bandes de fréquence indépendantes que l'on peut router dans un réseau maillé séparément. La demande de brevet US 2009/226169 A1 (Wei Wei et al.) décrit une architecture de réseau optique mettant en œuvre un tel format de modulation.

La technologie OFDM multi-bandes consiste à juxtaposer les bandes spectrales correspondant à plusieurs signaux multi-porteuses OFDM indépendants, de façon à transporter des débits plus élevés que ce que permettrait une technologie mono-bande. Chaque signal OFDM est constitué de plusieurs centaines de sous-porteuses (128, 256, 512, ...).

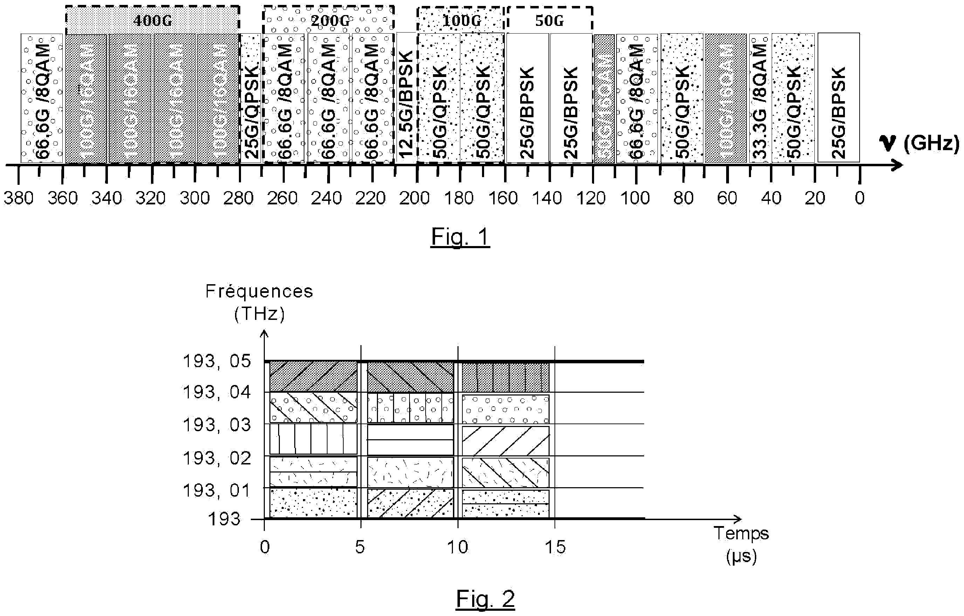

La **figure 1** présente un exemple de gestion du spectre optique grâce à la technologie OFDM multi-bandes.

Dans cet exemple, chaque bande est indépendante et est générée par son propre émetteur. On peut regrouper ensemble des bandes dans un super-canal, car elles partent d'une même origine pour aller vers une même destination. La largeur du signal OFDM et la modulation portée par les sous-porteuses constitutives du signal OFDM peuvent être choisies en fonction de la capacité et de la portée visée. Par exemple, la modulation BPSK (pour « Binary Phase Shift Keying ») a une portée en transmission très grande mais une efficacité spectrale faible, alors qu'à l'inverse la modulation 16-QAM (pour « Quadrature Amplitude Modulation ») a une portée limitée mais une très bonne efficacité spectrale.

Aujourd'hui, avec la technologie Nyquist WDM (consistant à appliquer un filtrage de Nyquist sur un canal WDM de manière à rendre son spectre rectangulaire et à pouvoir donc compacter les canaux de manière plus dense), l'efficacité spectrale la plus élevée est obtenue avec la modulation 16-QAM qui permet de transporter 200 Gbit/s dans une bande passante de 37.5 GHz. Cette efficacité spectrale résulte d'un compromis entre capacité transportée et robustesse à l'accumulation de bruit d'émission spontanée amplifiée (ASE) et des effets non-linéaires de propagation dans la fibre (effet Kerr qui engendre automodulation de phase (SPM pour « self-phase modulation »), modulation de phase croisée (XPM pour « cross-phase modulation »), et mélange à quatre ondes (FWM pour « Four-wave mixing »)). Avec la technologie OFDM, comme illustré sur la **figure 1****,** on peut imaginer faire passer 100 Gbit/s dans 20 GHz de bande passante avec la modulation 16-QAM (par exemple dans les sous-bandes spectrales [280 GHz; 300 GHz], [300 GHz ; 320 GHz], [320 GHz ; 340 GHz], [340 GHz ; 360 GHz]), ce qui génère peu ou prou la même efficacité spectrale maximale que la technologie Nyquist-WDM.

En réception, chaque bande du signal OFDM multi-bandes peut ensuite être extraite du signal global (multi-bandes) à l'aide de filtres optiques très sélectifs. Toutefois, ces filtres ont une granularité en bande passante de l'ordre de 10 GHz. Cette valeur de 10 GHz représente une limite de ce que l'on peut espérer réalisable dans les dix années à venir. Comme illustré sur la **figure 1****,** un slot spectral de 10 GHz peut typiquement transporter de 12.5 Gbit/s (en QPSK) à 25 Gbit/s (en 16-QAM), ce qui peut être encore trop grand pour effectuer un remplissage efficace de cette bande. Par conséquent, accéder à une granularité plus fine apporterait plus de flexibilité dans l'attribution des ressources de transport.

### 2.3 Autre solution et ses inconvénients

Dans l'article "Experimental demonstration of Elastic Optical Networking utilizing Time-Sliceable Bitrate Variable OFDM Transceiver" in Proc. OFC, 2014, paper Tu2G.8, J.M. Fabrega et al. proposent une solution permettant d'améliorer l'utilisation des ressources dans un réseau optique, en réalisant une découpe temporelle dans un signal OFDM pour des applications courte portée, de façon à atteindre une granularité sous la longueur d'onde. Les unités temporelles du signal OFDM sont routées dans le réseau au moyen de commutateurs optiques.

Si cette solution est intéressante en ce qu'elle propose d'utiliser simultanément les domaines spectral et temporel pour adapter la bande passante allouée en fonction de la bande passante requise pour la transmission de données, elle est cependant peu flexible dans la gestion de la ressource. En outre, elle repose sur une technique de routage à base de switches (ou commutateurs) rapides, qui sont peu économes en énergie.

Il existe donc un besoin d'une technique permettant de résoudre ces différents inconvénients de l'art antérieur.

### 3. Exposé de l'invention

L'invention répond à ce besoin en proposant un système d'émission de données dans un réseau optique comprenant une pluralité de nœuds optiques, selon la revendication 1.

En outre, un tel système comprend au moins une unité de contrôle d'un instant d'émission desdites rafales de données mono-bandes par lesdits nœuds sources, mettant en œuvre un plan de commande tenant compte d'un temps de trajet desdites rafales de données mono-bandes émises par lesdits nœuds sources vers ledit module de combinaison.

Ainsi, l'invention repose sur une approche tout à fait nouvelle et inventive de l'utilisation des ressources de transmission dans un réseau optique pour atteindre une granularité sous la longueur d'onde aussi fine que possible. En effet, l'invention propose avantageusement de combiner la solution temporelle d'accès à la granularité sous la longueur d'onde telle que proposée par exemple par la technique OBS, en utilisant des rafales optiques de données, et la solution spectrale d'accès à la granularité sous la longueur d'onde telle qu'offerte par exemple par la technologie MB-OFDM, en utilisant une juxtaposition de bandes spectrales correspondant à des signaux OFDM indépendants.

Ainsi, selon un mode de réalisation de l'invention, chacun des nœuds sources du système est associé à une bande spectrale, et émet des rafales de données dans cette bande. Ces rafales, ou bursts, de données sont construites par découpe temporelle d'un signal multi-porteuse de type OFDM, obtenu par modulation multi-porteuse d'un signal source coloré, sur lequel sont imprimées les données numériques à transmettre. La longueur d'onde du signal source, et donc la couleur du signal, peut varier d'une rafale de données à la suivante, en fonction par exemple du nœud destinataire auquel sont destinées les données. Chacun des nœuds sources émet donc des rafales mono-bandes OFDM de données, dans des bandes spectrales indépendantes.

En outre, un tel système comprend également un module de combinaison, ou combineur de bandes, qui reçoit l'ensemble des rafales de données mono-bandes en provenance des nœuds sources, et les couple en rafales de données OFDM multi-bandes.

Afin que ces rafales de données MB-OFDM soient parfaitement combinées au niveau du combineur de bandes, une architecture de contrôle reposant sur un plan de commande spécifique permet de contrôler les instants d'émission des rafales mono-bandes par les différents nœuds sources, afin qu'elles atteignent simultanément le combineur de bandes pour y être combinées en rafales multi-bandes. Un tel plan de commande repose sur une connaissance précise des temps de trajet des rafales de données mono-bandes sur le réseau optique entre chacun des nœuds sources et le combineur de bandes. Il permet en outre, comme dans les techniques TWIN par exemple, d'éviter les collisions dans le réseau optique et de gérer les contentions au sein du réseau et au niveau des nœuds destinataires. Une telle architecture de contrôle peut être centralisée ou distribuée.

Selon un premier aspect de l'invention, pour un nœud source donné, lesdites rafales de données mono-bandes sont de durées variables.

On obtient ainsi une très grande flexibilité dans la gestion de la ressource, en réservant par exemple plusieurs unités temporelles successives à l'émission d'une rafale de données de durée plus importante, dans une bande spectrale.

Selon un autre aspect de l'invention, pour un nœud source donné, lesdites rafales de données mono-bandes peuvent être associées à des signaux optiques multi-porteuses de données présentant des formats de modulation différents.

La flexibilité dans la gestion de la ressource est ainsi encore accrue par la possibilité d'avoir des formats de modulation différents d'un burst à l'autre. Chaque nœud source peut donc fournir un signal sous forme de rafales de données ayant à la fois des longueurs d'onde différentes et des formats de modulation différents d'une rafale à l'autre.

Selon encore un autre aspect de l'invention, pour un nœud source donné, lesdites rafales de données mono-bandes peuvent être associées à des débits de transmission de données différents, ce qui permet une gestion fine de la ressource réseau et permet une bonne adaptation aux besoins en bande passante.

La flexibilité en termes de choix de modulation (débit et format) pour chaque bande OFDM et à l'intérieur du signal OFDM lui-même, offre une multiplicité de combinaisons permettant d'adapter parfaitement la quantité de ressources utilisées à la quantité de données à transporter et aux objectifs de portées (en distance).

Selon encore un autre aspect de l'invention, ladite longueur d'onde source associée à une rafale de données mono-bande est une longueur d'onde dédiée à un nœud destinataire de ladite rafale de données mono-bande.

Dans ce mode de réalisation, le système de l'invention repose sur un aiguillage dans le réseau optique par la longueur d'onde, mettant en œuvre un accord à la source. Une longueur d'onde est associée à une destination, et le nœud source émet sa rafale de données à la longueur d'onde de la destination avec laquelle elle veut communiquer.

A titre alternatif, dans un autre mode de réalisation, le système de l'invention repose sur un accord à la réception. Dans ce cas, le nœud source émet toujours ses rafales de données à la même longueur d'onde, et c'est chaque nœud destinataire qui s'accorde à la longueur d'onde des rafales de données qui lui sont destinées.

Selon un mode de réalisation particulier, l'un desdits nœuds sources comprend un laser accordable, de préférence rapidement (avec un temps de changement de longueur d'onde inférieur à 100 ns) et présentant un très faible bruit de phase (avec une largeur de raie d'émission spectrale inférieure à 100 kHz).

Selon un autre mode de réalisation particulier de l'invention, l'un desdits nœuds sources comprend au moins deux lasers à cavité externe générant chacun un signal source à une longueur source prédéterminée qui lui est propre, et au moins deux commutateurs optiques ayant une fonction de portes optiques en sortie desdits lasers à cavité externe, aptes à découper temporellement lesdits signaux sources.

En effet, l'utilisation de lasers à cavité externes, présentant un bruit de phase très faible, est particulièrement adaptée pour la technique de modulation multi-porteuse OFDM, qui est très sensible au bruit de phase provoquant de l'interférence entre sous-porteuses, ou ICI (pour « Inter Carrier interférence »). En outre, l'utilisation de tels lasers préréglés sur certaines longueurs d'onde et associés à des commutateurs optiques ayant des temps de réponse faibles (par exemple des amplificateurs à semi-conducteurs utilisés en tant que portes optiques) constitue une alternative intéressante aux lasers rapidement accordables à très faible bruit de phase. Les progrès de l'intégration optique devraient en outre permettre de réaliser cet assemblage sur un seul composant dans un futur proche.

Selon un aspect particulier de ce mode de réalisation, lesdits lasers à cavité externe sont communs à au moins deux desdits nœuds sources, ce qui permet avantageusement de mutualiser les sources côté émission.

Selon un autre mode de réalisation de l'invention, ladite bande spectrale associée à l'un desdits nœuds sources est variable, de façon à offrir un degré de liberté supplémentaire dans la flexibilité offerte pour adapter la granularité de la bande passante utilisée à la quantité de données à transporter. Dans ce cas, le plan de commande doit également permettre de contrôler l'allocation des bandes spectrales aux différents nœuds sources.

Un tel plan de commande met avantageusement en œuvre un échange de messages entre les différents nœuds optiques (nœuds sources, nœuds destinataires, nœuds intermédiaires) et l'unité de contrôle, qui peut être centralisée ou distribuée.

Selon un mode de réalisation, dans lequel la largeur de bande utilisée par un nœud source n'est pas adaptable, ladite au moins une unité de contrôle comprend des moyens de calcul d'une durée desdites rafales de données mono-bandes à partir d'une information de largeur de bande spectrale associée à l'un desdits nœuds sources insérée dans un message échangé entre ledit nœud source et ladite unité de contrôle. Cette information comprend par exemple le numéro de la porteuse optique, ainsi que des paramètres de la modulation OFDM (nombre de sous-porteuses, format de modulation, préfixe cyclique, etc.).

Selon un autre mode de réalisation, l'émission par un nœud source sur une bande donnée peut présenter des caractéristiques, ou paramètres, de transmission différents d'une rafale à l'autre. Cette adaptation des caractéristiques de transmission peut se faire à l'initiative de l'unité de contrôle, du nœud source lui-même, ou d'un nœud destinataire.

Dans ce mode de réalisation, l'unité de contrôle comprend des moyens de calcul dudit instant d'émission à partir de ces paramètres de transmission d'une rafale de données mono-bande par l'un desdits nœuds sources, lesdits paramètres de transmission étant contenus dans au moins certains desdits messages échangés. Ces messages peuvent être des messages de requête transmis par le nœud source à l'unité de contrôle, des messages d'autorisation transmis par l'unité de contrôle au nœud source, des messages transmis par l'unité de contrôle aux nœuds destinataires, ou encore des messages de commande transmis par un nœud destinataire vers un nœud source, ou inversement.

Selon encore un autre mode de réalisation, la largeur de la bande spectrale associée à l'un desdits nœuds sources étant variable, le plan de commande comprend des messages de commande à destination d'au moins un nœud intermédiaire du réseau comprenant une information relative à une largeur de bande courante pour ledit nœud source. De tels messages de commande permettent d'indiquer aux nœuds intermédiaires du réseau (par exemple un nœud séparateur de bande apte à transformer la rafale de données multi-bande en une pluralité de rafales de données mono-bandes) les réglages à prendre en compte en termes de largeur de bande pendant un temps donné.

Les différents modes de réalisation et caractéristiques présentés ci-avant en relation avec le système d'émission de l'invention peuvent être combinés, en tout ou en partie. On peut notamment envisager que les rafales de données présentent des formats de modulation et des débits différents de rafale à rafale, ainsi que des longueurs d'onde source différentes, sur une même bande spectrale.

L'invention concerne également un procédé d'émission de données dans un réseau optique comprenant une pluralité de nœuds optiques, selon la revendication 13.

Un tel procédé d'émission présente en combinaison tout ou partie des caractéristiques exposées ci-avant en relation avec le système d'émission de l'invention.

L'invention concerne encore un réseau optique selon la revendication 14.

Un tel réseau optique comprend donc, outre un ensemble de nœuds sources et de nœuds destinataires, des étages d'agrégation des rafales de données mono-bandes en rafales de données multi-bandes (modules de combinaison de bandes ou combineur de bandes), des nœuds de routage des rafales multicolores transitant dans le cœur du réseau, et des nœuds de routage par bande (module séparateur de bandes).

Un tel réseau optique repose avantageusement sur une architecture utilisée pour les solutions SLPSN sans pertes, basées sur un routage en longueur d'onde, avec des nœuds de cœur passifs, ne mettant pas en œuvre de conversion O-E-O (optique-électrique-optique), et qui sont donc économes en énergie.

Un tel réseau optique présente en combinaison tout ou partie des caractéristiques exposées dans l'ensemble de ce document, et notamment ci-avant en relation avec le système d'émission de l'invention.

L'invention concerne encore un signal optique selon la revendication 15.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- La figure 1, déjà décrite en relation avec l'art antérieur, présente un exemple de gestion du spectre d'une fibre optique avec la technologie MB-OFDM ;
- la figure 2 présente le principe général de la découpe du canal de transmission dans le domaine temporel et spectral selon un mode de réalisation de l'invention ;
- la figure 3 illustre un exemple de répartition des données dans les slots temporels et les bandes spectrales selon un mode de réalisation de l'invention ;
- la figure 4 présente un exemple de réseau optique selon un mode de réalisation de l'invention, reposant sur une architecture TWIN de routage en longueur d'onde ;
- la figure 5 illustre un schéma fonctionnel d'un émetteur mono-bande OFDM de l'art antérieur ;
- la figure 6 propose un exemple de réalisation d'une source OFDM multi-bandes selon un mode de réalisation de l'invention ;
- la figure 7 illustre une première variante de réalisation de l'exemple de la figure 6, moins coûteuse et plus économe en termes de consommation électrique ;
- la figure 8 illustre une deuxième variante de réalisation de l'exemple de la figure 6, permettant une mutualisation des sources côté émission ;
- la figure 9 présente un exemple de réalisation du module de combinaison de bandes selon un mode de réalisation de l'invention ; et
- la figure 10 présente un schéma fonctionnel d'un récepteur mono-bande OFDM de l'art antérieur.

### 5. Description détaillée de modes de réalisation de l'invention

Le principe général de l'invention repose sur la combinaison de deux solutions temporelle et spectrale d'accès à la granularité sous la longueur d'onde dans un réseau de transmission optique, qui permet de démultiplier la capacité des réseaux en offrant une granularité la plus fine possible, tout en permettant une augmentation des débits par canal jusqu'au Térabit/s (voire au-delà), et qui offre une flexibilité accrue par rapport aux techniques de l'art antérieur.

On présente désormais, en relation avec la **figure 2****,** un exemple de représentation d'un canal de transmission découpé selon le principe général de l'invention exposé ci-avant, à savoir :
- une découpe temporelle par rafale de données (sur la **figure 2****,** les rafales de données présentent une durée de 4.5 µs pour une durée de slots de 5 µs par exemple) et
- une découpe spectrale par bande (de 10 GHz, cinq bandes étant illustrées sur la **figure 2** pour former un canal de 50 GHz).
Sur la **figure 2****,** les trames de fond (grisée, pois, points...) correspondent chacune à une bande spectrale différente du signal multi-bandes OFDM et les hachures (traits obliques, verticaux, horizontaux, ...) correspondent à des contenus différents dans les différentes rafales constituées par cette découpe. On a représenté cinq bandes spectrales, à savoir :
- une première bande spectrale [193 THz ; 193,01 THz] ;
- une deuxième bande spectrale [193,01 THz ; 193,02 THz] ;
- une troisième bande spectrale [193,02 THz ; 193,03 THz] ;
- une quatrième bande spectrale [193,03 THz ; 193,04 THz] ;
- une cinquième bande spectrale [193,04 THz ; 193,05 THz].

On a également représenté trois intervalles ou slots temporels, à savoir :
- un premier slot temporel de 0 à 5 µs ;
- un deuxième slot temporel de 5 à 10 µs ;
- un troisième slot temporel de 10 à 15 µs.

Dans l'exemple de la **figure 2****,** le quantum de données est constitué d'un signal occupant une bande spectrale de 10 GHz et une durée de 4.5 µs.

Ainsi, par rapport à la technique MB-OFDM de l'art antérieur, le canal « multi-bandes OFDM » est découpé dans le temps en slots temporels (encore appelés rafales), qui peuvent être de durée variable (entre quelques microsecondes et quelques millisecondes) ; de même, dans le domaine fréquentiel, la rafale, qui occupait une bande spectrale de 50 GHz selon la technique OBS de l'art antérieur, voit sa bande spectrale et par conséquent sa capacité de transmission, réduite d'un facteur égal au nombre de bandes constituant le canal multi-bandes OFDM. Le quantum de capacité obtenu par la technique OBS de l'art antérieur est donc divisé, dans un mode de réalisation de l'invention, par le nombre de bandes constituant le canal spectral.

Dans ce mode de réalisation de l'invention, le quantum de capacité est alors équivalent à celui que pourrait avoir un paquet optique d'une durée plusieurs fois plus petite que la rafale de la technique OBS (5 dans l'exemple de la **figure 2**). Par exemple, le mode de réalisation illustré en figure 2 permet d'obtenir l'équivalent d'une capacité pour un paquet d'une durée de 0,9 µs dans une bande spectrale traditionnelle de 50 GHz.

Il est important de noter ici, que la modulation OFDM appliquée à l'optique apporte non seulement une finesse de gestion du spectre dans sa version multi-bandes, mais également la possibilité de s'adapter finement au canal de transmission. En effet, la flexibilité en termes de choix de modulation (débit et format) pour chaque bande OFDM et à l'intérieur du signal OFDM lui-même, offre une multiplicité de combinaisons permettant d'adapter parfaitement la quantité de ressources utilisées à la quantité de données à transporter et aux objectifs de portées (en distance). Il convient aussi de noter qu'un signal multi-bandes OFDM contient plusieurs bandes optiques, chaque bande optique correspondant à une longueur d'onde d'émission d'un laser et pouvant contenir plusieurs sous-porteuses électriques pour une porteuse optique.

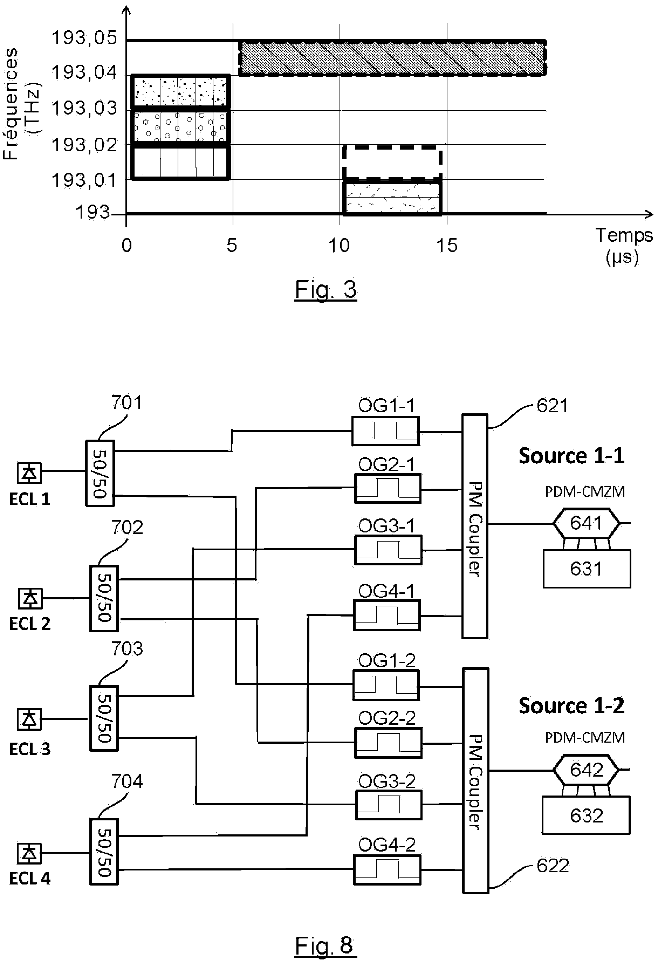

La **figure 3** illustre un exemple de répartition possible des données dans les slots et les bandes dans un mode de réalisation de l'invention. Ainsi, on peut occuper plusieurs slots temporels (rafales) dans une bande spectrale, comme illustré par le rectangle à trame grisée et à hachures obliques. On peut également avoir une rafale de données répartie sur plusieurs bandes OFDM, comme illustré par le pavé à hachures verticales, regroupant trois rafales mono-bandes respectivement à trames de fond blanche, à pois et à points : ceci permet par exemple la diffusion d'un même contenu à plusieurs destinataires.

Plus généralement, on peut utiliser un quantum de données ou une combinaison de quanta de données selon l'axe temporel et/ou spectral. D'autre part, il est possible d'ajuster le débit à l'intérieur du quantum de données (représenté sur la figure 3, à titre d'exemple, par l'entourage des blocs temps/fréquence en traits plein pour un débit de 10 Gbit/s, en pointillés épais pour 25 Gbit/s, et en traits pointillés plus fins pour 50 Gbit/s).

Ainsi, la combinaison des deux domaines temporel et spectral proposée dans ce mode de réalisation de l'invention permet :
- d'avoir des quanta de données plus petits que dans l'art antérieur (comme ceux de la technique de commutation optique par paquets OPS), sans cependant subir les mêmes contraintes techniques au niveau des composants optiques, notamment en termes de vitesse de traitement ;
- d'avoir un réseau de très grande capacité (grâce aux très grands débits que l'on peut atteindre avec la technique de modulation multi-porteuse OFDM), avec un accès à une granularité très fine (grâce à l'utilisation de rafales) et une très grande flexibilité dans la gestion de la ressource (débits et formats de modulation variables, possibilité de rafales de durée variable) ;
- l'utilisation possible des architectures de réseau utilisées pour les solutions SLPSN sans pertes (qui sont basées sur le routage en longueur d'onde) avec des nœuds de cœur passifs (sans conversion optique/électrique/optique) et donc économes en consommation énergétique ;
- la réalisation d'architectures pour des réseaux couvrant à la fois le « métro » et l'« accès » jusqu'au cœur de réseau,
- un plus grand nombre de nœuds sources et/ou destinataires que pour les solutions SLPSN de l'art antérieur (multiplication par un facteur égal au nombre de bandes spectrales possibles), chaque bande pouvant être associée à un nœud destinataire. En outre, un nœud destinataire peut aussi avoir accès à plusieurs bandes spectrales du canal de transmission si elle a besoin de beaucoup de débit.

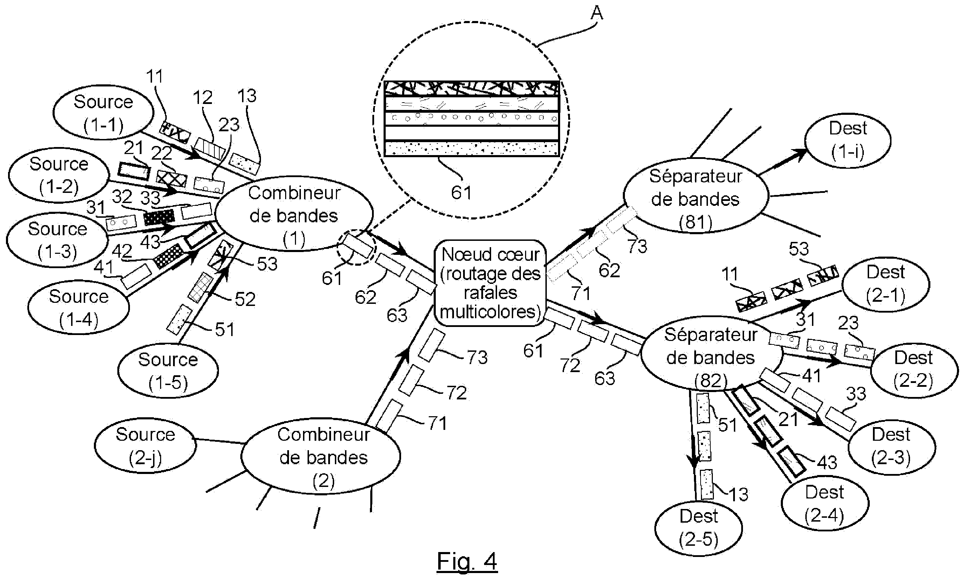

On présente désormais, en relation avec la **figure 4****,** un exemple de réseau optique selon un mode de réalisation de l'invention. Un tel réseau optique comprend un ensemble de nœuds sources, parmi lesquels on a plus particulièrement représenté, à titre d'exemple, des sources référencées 1-1, 1-2, 1-3, 1-4, 1-5 et 2-j. Chacune de ces sources émet des rafales de données mono-bandes OFDM, dont trois ont été représentées schématiquement pour chaque source.

Ainsi, la source référencée 1-1 émet trois rafales mono-bandes OFDM successives, respectivement référencées 11, 12 et 13 ; la source référencée 1-2 émet trois rafales mono-bandes OFDM successives référencées 21, 22 23 ; la source référencée 1-3 émet trois rafales mono-bandes OFDM successives référencées 31, 32, 33 ; la source référencée 1-4 émet trois rafales mono-bandes OFDM successives référencées 41, 42 43 ; la source référencée 1-5 émet trois rafales mono-bandes OFDM successives référencées 51, 52, 53.

Pour une source donnée, les rafales successives peuvent présenter des longueurs d'onde sources différentes, comme illustré schématiquement par la trame de fond différente de ces rafales, qui représente une coloration différente du signal émis. On peut bien sûr également envisager qu'une source donnée émette toutes ses rafales de données à la même longueur d'onde source. On peut encore avoir une alternance, dans les rafales de données mono-bandes OFDM émises par une source, de rafales successives présentant la même longueur d'onde source, et de rafales présentant des longueurs d'onde sources distinctes.

Chacune des sources 1-1 à 2-j est associée à une bande spectrale qui lui est propre à un instant donné. Les bandes spectrales des sources référencées 1-1 à 1-5 sont de préférence indépendantes. Comme on le verra également plus loin dans ce document, il est également possible de faire varier la bande spectrale associée à une source.

Le réseau de la **figure 4** comprend également deux éléments de routage, référencés 1 et 2, et appelés combineurs de bandes. Ainsi, le combineur de bandes 1 reçoit les rafales de données mono-bandes 11-13, 21-23, 31-33, 41-43, 51-53 en provenance des nœuds sources 1-1 à 1-5, et les combine en rafales de données multi-bandes OFDM référencées 61 à 63. Par souci de simplification du schéma de la figure 4, ces rafales 61 à 63 ont été représentées avec une trame de fond blanche, mais il faut comprendre que chacune de ces rafales correspond à la juxtaposition des rafales mono-bandes OFDM reçues des sources 1-1 à 1-5, comme illustré par le zoom A sur la rafale de données multi-bandes OFDM 61. On note ainsi que la rafale 61 occupe une bande spectrale obtenue par juxtaposition des bandes spectrales des rafales 11, 21, 31, 41 et 51, et correspond à la combinaison de ces cinq rafales mono-bandes.

En d'autres termes, les éléments de réseau appelés « combineur de bandes » combinent (à l'aide de coupleurs passifs) les N (ici N=5 pour l'élément 1) bandes OFDM qui constituent les canaux multi-bandes OFDM.

De façon à éviter les collisions dans le réseau et à effectuer une recombinaison correcte des canaux multi-bandes OFDM au niveau du « combineur de bandes », un plan de commande élaboré doit être mis en œuvre.

Ce plan de commande est constitué par les unités de contrôle des équipements (notamment des nœuds sources), le canal de contrôle qui les interconnecte et les messages échangés sur ce canal de contrôle. Ce plan de commande prend en compte les temps de trajet entre les éléments du réseau, par exemple par mécanisme de synchronisation externe et échange d'estampilles temporelles (timestamps), ou par processus de ranging (mise à l'heure).

Ce plan de commande met en œuvre des échanges de messages entre les nœuds sources, les nœuds destinataires et les unités de contrôles pour informer du besoin de communication des nœuds sources, de l'occupation des récepteurs dans les nœuds destinataires ou les nœuds sources. Par exemple, par un envoi périodique de rapports vers l'unité de contrôle (centralisée ou distribuée), les nœuds sources informent de l'état de leurs files d'attente, tandis que les unités de contrôle informent les nœuds sources des dates auxquelles ils peuvent émettre vers les nœuds destinataires. Dans un autre exemple, l'unité de contrôle reçoit une requête de bande passante entre plusieurs éléments du réseau par l'intermédiaire d'un plan de commande d'un équipement client (par exemple requête GMPLS (pour « Generalized Multi-Protocol Label Switching ») provenant de routeurs).

Un tel plan de commande peut être mis en œuvre dans une unité de contrôle centralisée contrôlant l'ordonnancement des rafales de données à destination de l'ensemble des nœuds destinataires. Une telle unité de contrôle gère toutes les réservations en attribuant à chaque nœud source des ressources à utiliser pour transmettre des rafales de données à une destination quelconque.

A titre alternatif, un tel plan de commande peut être mis en œuvre dans une unité de contrôle distribuée dans le réseau, qui indique aux nœuds sources à quels instants ils doivent émettre, en utilisant un mécanisme de requêtes et d'autorisations (ou « requests » et « grants »).

La ou les unité(s) de contrôle, qu'elle(s) soi(en)t centralisée(s) ou distribuée(s), met en œuvre des algorithmes de calcul pour déterminer les dates d'émission et de réception et attribuer des autorisations avec des messages d'autorisation d'émission aux nœuds sources.

Ce plan de commande doit avoir connaissance des temps de trajet entre les différents éléments de réseau de façon à décider des moments adéquats pour l'émission des rafales mono-bande OFDM.

Dans le cadre de l'invention, il est particulièrement important, par rapport à un réseau TWIN classique, d'ajouter une dimension particulière au plan de commande, permettant de gérer les nœuds sources afin qu'ils allouent au mieux les time slots des rafales, et les bandes OFDM, pour que les rafales MB-OFDM soient combinées parfaitement au niveau des combineurs de bandes 1 et 2 de la **figure 4****.**

Ainsi, dans un premier mode de réalisation où la largeur de bande utilisée par un nœud source n'est pas adaptable, une information quant à cette largeur de bande est insérée dans les messages entre le nœud source et l'unité de contrôle.

Cette information comprend par exemple le numéro de la porteuse optique, mais aussi des informations concernant le nombre de sous porteuses, le format de modulation, les paramètres liés au FEC, et éventuellement d'autres informations liées au mode de réalisation de l'OFDM telles que le préfixe cyclique, les sous-porteuses pilotes, des symboles d'apprentissage.

Ces informations permettent notamment à l'unité de contrôle de calculer la durée des rafales. L'unité de contrôle peut aussi utiliser ces informations pour informer un nœud destinataire en réception du type de signal OFDM qu'il doit recevoir et la date à laquelle il doit le recevoir, pour que le récepteur du nœud destinataire puisse ajuster éventuellement ses paramètres en prévision de la réception. Dans ce cas, le plan de commande inclut des messages dit « de réglage » envoyés par l'unité de contrôle vers le nœud destinataire, ce message comprenant des paramètres de réglage en réception.

Dans un autre mode de réalisation, l'émission par un nœud source sur une bande donnée peut avoir des caractéristiques de transmission différentes (en termes de nombre de sous porteuses, format de modulation, polarisation et débits) d'une rafale à l'autre, et ce pour un même nœud destinataire ou pour des nœuds destinataires différents. L'unité de contrôle peut être à l'origine des changements de caractéristiques, par exemple pour prendre en compte des conditions de transmission variables ou pour ajuster le débit à la charge.

Dans ce cas, les messages de requête intègrent les paramètres permettant à l'unité de contrôle de faire ses calculs d'autorisation, notamment la date d'émission, mais aussi le débit, le format de modulation, la polarisation, les sous-porteuses, ... Les messages d'autorisation intègrement également ces paramètres pour que l'adaptation des rafales soit faite selon les calculs de l'unité de contrôle. Enfin, des messages supplémentaires peuvent avantageusement être transmis vers les nœuds destinataires afin que leurs récepteurs puissent s'adapter en fonction de ces paramètres.

Dans un autre mode de réalisation, l'unité de contrôle n'est pas à l'origine de l'adaptation des caractéristiques de transmission entre différentes rafales d'un même nœud, cette adaptation pouvant être alors initiée par le nœud destinataire vers ses nœuds sources, afin d'améliorer la qualité de transmission. Des messages de commande spécifiques (avec les paramètres ci-avant) sont alors transmis, du nœud destinataire vers les nœuds sources, pour mettre en œuvre cette adaptation. Il est également envisageable que cette adaptation soit contrôlée depuis un nœud source transmettant de tels messages de commande spécifiques vers des nœuds destinataires.

Enfin, dans un autre mode de réalisation, les nœuds sources sont aptes à modifier temporairement la largeur des bandes spectrales sur lesquelles ils émettent à un instant donné. Outre la négociation de cette largeur qui peut être faite à l'initiative d'un autre élément du réseau (nœud source, nœud destinataire ou unité de contrôle) comme décrit précédemment, le plan de commande intègre alors avantageusement des messages de commande à destination des nœuds intermédiaires du réseau (e.g. les nœuds séparateurs de bande) afin de leur indiquer les réglages à prendre en compte en termes de largeur de bande, pour que ces nœuds intermédiaires puissent modifier la largeur spectrale d'une bande transmise par ces nœuds pendant un temps donné.

Les rafales de données MB-OFDM issues des combineurs de bandes 1 et 2 sont ensuite routées jusqu'à un nœud cœur, qui est un nœud de routage de rafales multi-bandes OFDM, référencé 7; un tel nœud cœur est similaire aux nœuds utilisés dans la solution TWIN de l'art antérieur. En effet, dans le mode de réalisation de l'invention illustré en **figure 4****,** l'infrastructure optique pour le transport et le routage peut être la même que celle d'une solution TWIN classique, telle que décrite notamment par A. Triki, et al. dans "Efficient control plane for passive optical burst switching network", ICOIN 2013, pp. 535-540. De tels nœuds cœur 7 peuvent être constitués de démultiplexeurs avec une grille spectrale fixe ou alors de commutateurs sélectifs en longueur d'onde (WSS : Wavelength Selective Switch) de façon à permettre une reconfiguration (lente) du réseau notamment dans le cas de la protection.

De tels nœuds cœur 7 aiguillent les rafales MB-OFDM en fonction de leur couleur, i.e. de leurs longueurs d'onde. Ainsi, parmi les rafales 61, 62 et 63 reçues du combineur 1, les rafales 61 et 63 sont aiguillées vers un séparateur de bandes 82, pour desservir un ensemble de nœuds destinataires 2-1 à 2-5 et la rafale 62 est aiguillée vers un séparateur de bandes 81 pour desservir un ensemble de nœuds destinataires 1-i. De même, parmi les rafales 71, 72 et 73 reçues du combineur de bandes 2, les rafales 71 et 73 sont aiguillées vers le séparateur de bandes 81 et la rafale référencée 72 est aiguillée vers le séparateur de bandes 82.

De tels séparateurs de bandes 81 et 82 sont constitués de filtres très sélectifs en longueurs d'onde (largeur de 10 GHz par exemple) utilisés dans les solutions multi-bandes OFDM. Ces filtres peuvent être implémentés au moyen d'une technologie « optique en espace libre » (avec réseau de diffraction et monochromateur), ou bien alors d'une technologie de type LCoS (Liquid Crystal on Silicon) plus compacte combinant réseau de diffraction et matrice de pixels LCoS pour l'aiguillage, ces technologies étant largement utilisées par les industriels aujourd'hui.

En sortie du séparateur de bandes 82, chacune des rafales MB-OFDM 61, 72 et 63 est à nouveau séparée en cinq rafales mono-bandes OFDM, qui, en fonction de leur longueur d'onde, sont aiguillées vers l'un des nœuds destinataires 2-1 à 2-5. On retrouve ainsi les rafales référencées 11 et 53, aiguillées vers le récepteur 2-1; les rafales référencées 31 et 23, aiguillées vers le récepteur 2-2 ; les rafales référencées 41 et 33, aiguillées vers le récepteur 2-3 ; les rafales référencées 21 et 43, aiguillées vers le récepteur 2-4; les rafales référencées 51 et 13, aiguillées vers le récepteur 2-5.

Ainsi, dans le réseau de la **figure 4****,** les rafales multi-bandes OFDM sont vues et traitées comme des rafales multicolores avec deux étages de démultiplexage. On notera que, pour simplifier le schéma de la **figure 4****,** seul un sens de transmission a été représenté mais les deux sens sont bien sûr normalement présents et peuvent être utilisés.

On notera que le système illustré en **figure 4** peut s'appliquer à un réseau comprenant aussi bien des nœuds de bord (nœuds edge) que des nœuds de cœur de réseau. Les nœuds de bord peuvent contenir une seule source ou plusieurs sources (côté émission) et un récepteur ou plusieurs récepteurs (côté réception) tels qu'illustrés en **figure 4****,** sachant que pour assurer une communication bidirectionnelle les nœuds de bord contiennent une partie émission et une partie réception. Les nœuds de cœur de réseau correspondent aux fonctions de combinaison et/ou d'aiguillage passif (sans conversion O/E/O) dans un tel réseau, implémentées par le combineur de bandes, le nœud cœur (routage des rafales multicolores) et le séparateur de bandes illustrés en **figure 4****.**

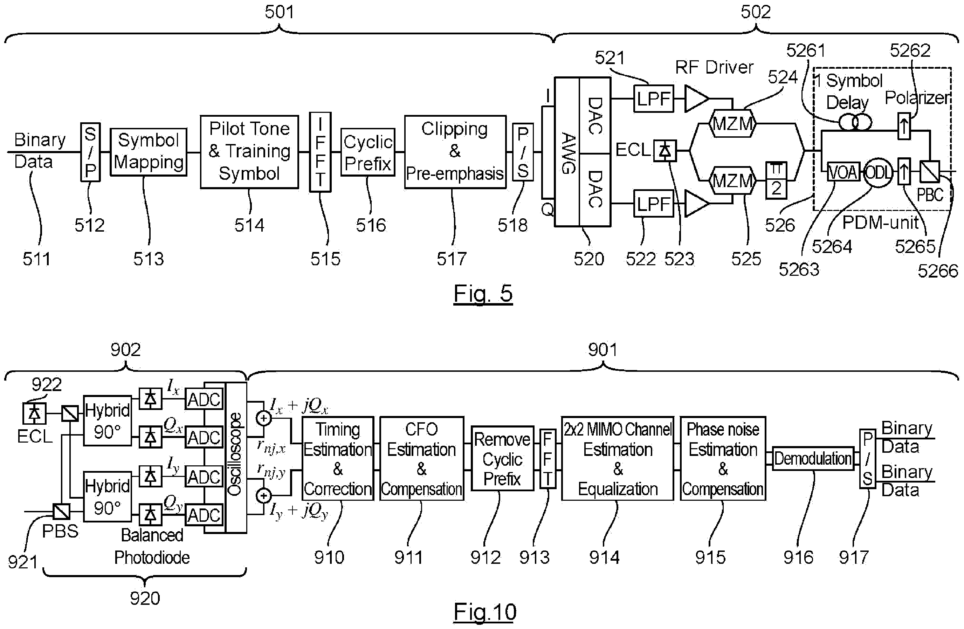

Le réseau de la **figure 4** repose sur une solution avec accord à la source, dans laquelle le laser utilisé pour chaque bande du signal multi-bandes OFDM est accordable de façon à émettre chaque rafale sur la longueur d'onde du récepteur de destination. Un schéma d'une telle source est représenté sur la **figure 5****.** L'émetteur OFDM mono-bande de la **figure 5** est constitué d'une partie numérique 501, qui opère le traitement du signal numérique (DSP) requis par la technologie OFDM, et d'une partie analogique 502 qui convertit du domaine électrique dans le domaine optique les données à transporter.

Des données binaires 511 sont incidentes en entrée de la partie de traitement numérique 501. Elles traversent un convertisseur série/parallèle 512, puis sont converties en symboles par le module « Symbol mapping » référencé 513. Des sous-porteuses pilotes sont insérées au sein des sous-porteuses utiles par le module référencé 514, qui permet également l'introduction de symboles de référence (aussi qualifiés de symboles d'apprentissage). La chaîne de traitement comprend également un module IFFT 515 réalisant une transformée de Fourier inverse, ainsi qu'un module référencé 516 permettant l'introduction d'un préfixe cyclique. Un tel préfixe cyclique, transmis durant l'intervalle de garde, permet d'absorber l'interférence entre symboles, ou ISI (pour « InterSymbol Interference »). Le signal subit ensuite un écrêtage et une préaccentuation dans le module référencé 517, avant de subir une conversion parallèle série P/S 518, à l'issue de laquelle on obtient les deux composantes en phase et en quadrature I et Q du signal.

Dans la chaîne de traitement analogique 502, le signal OFDM est généré par un générateur de signaux analogiques 520 (ici représenté par un générateur de signaux aléatoires, en anglais AWG pour « Arbitrary Waveform Generator », typiquement employé en laboratoire). Un tel générateur 520 comprend notamment deux modules de conversion numérique-analogique DAC permettant de transférer dans le domaine analogique les deux composantes (en phase et en quadrature) du signal OFDM générées dans le domaine numérique. Grâce aux deux convertisseurs numériques analogiques du générateur 520, les deux composantes I et Q du signal OFDM sont converties en signaux analogiques.

Après filtrage par un filtre passe-bas (LPF pour « Low Pass Filter », 521 et 522) permettant la suppression des composantes d'aliasing (ou recouvrement de spectre en français), les deux composantes I et Q du signal OFDM sont optiquement combinées au moyen d'un modulateur IQ sur une porteuse optique fournie par le laser d'émission (ECL pour « External Cavity Laser » 523). Le modulateur IQ est composé de deux modulateurs de type Mach-Zehnder (MZM 524 et 525) disposés en parallèle dans une superstructure Mach-Zehnder dont la différence de phase est de 90°.

Le signal optique peut alors subir un multiplexage en polarisation 526, mettant en œuvre, sur une première branche :
- un décalage d'un temps symbole 5261,
- un premier polariseur 5262 ;
et sur une deuxième branche :
- un atténuateur variable optique 5263 (en anglais VOA pour « Variable Optical Attenuator ») ;
- une ligne à retard 5264 (en anglais ODL pour « Optical Delay Line ») ;
- un deuxième polariseur 5265 ; et
- un combineur de faisceau de polarisation 5266 (en anglais PBC pour « Polarization Beam Combiner »).

Ce multiplexage en polarisation est optionnel, les données émises sur la seconde polarisation l'étant par un émetteur OFDM spécifique identique à celui décrit ci-dessus. Dans tous les cas, l'architecture spécifique des symboles d'apprentissage est avantageusement respectée sur les deux polarisations, afin de permettre à l'algorithme de séparation de polarisation de fonctionner de manière optimale.

Selon un mode de réalisation, le nœud source émettant un signal OFDM sur une bande qui lui est associée comprend un laser accordable, ce qui lui permet de changer la longueur d'onde d'émission. Ce laser est avantageusement accordable rapidement (temps d'accord de l'ordre de la centaine de nanosecondes ou moins) et peut être réalisé à partir d'un laser MG-Y (Modulated Grating Y) tel que décrit par J.-O. Wesström et al. dans "State-of-the-art performance of widely tunable modulated grating Y-branch lasers" in Proceedings of OFC, 2004, paper TuE2.

Toutefois, les largeurs de raie de ce type de laser peuvent être incompatibles (trop grandes) avec les largeurs de raie requises pour la génération et surtout la détection (cohérente) des signaux OFDM. En effet, l'OFDM est très sensible au bruit de phase (provenant notamment des lasers) qui provoque de l'interférence entre sous-porteuses (Inter Carrier Interference).

Afin de tenir compte de ce désagrément, le laser accordable de cette source présente avantageusement une largeur de raie très fine (< 100KHz), afin d'obtenir un bruit de phase très faible. Ainsi, idéalement, on utilise des lasers rapidement accordables à très faible bruit de phase.

Dans un mode de réalisation alternatif (et éventuellement complémentaire), on utilise des lasers individuels (par exemple à cavité externe, ceux-ci ayant en outre l'avantage de présenter un très faible bruit de phase), préréglés sur certaines longueurs d'onde, associés à des commutateurs optiques ayant des temps de réponse inférieurs à 100 ns (par exemple des amplificateurs à semiconducteur utilisés en tant que portes optiques). Ces lasers et ces commutateurs optiques peuvent être intégrés sur un seul composant optique.

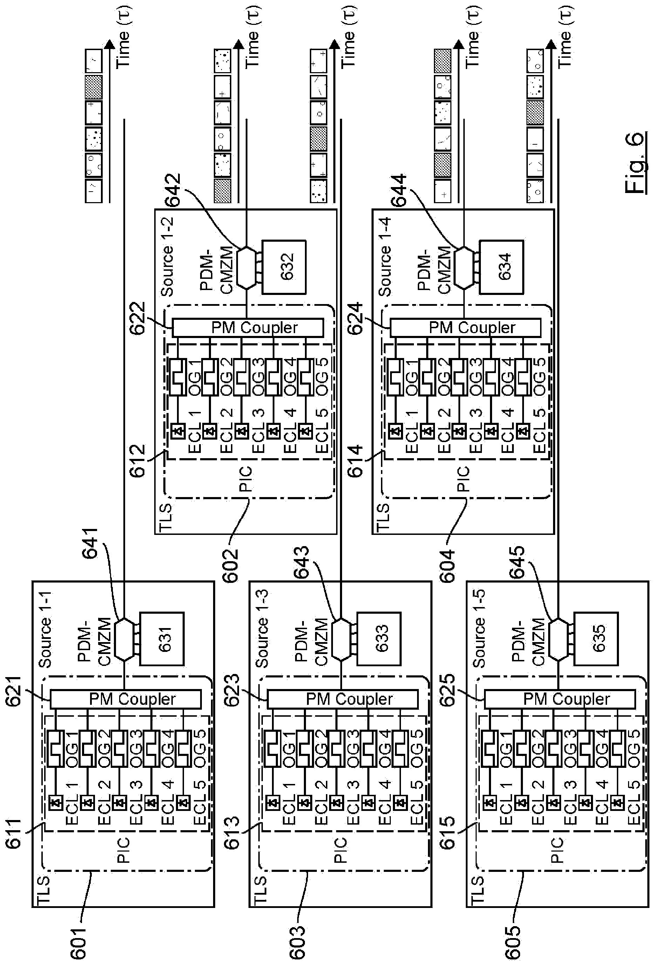

On présente désormais, en relation avec la **figure 6****,** un exemple de réalisation d'une source OFDM multi-bandes qui est en fait constituée de cinq sources mono-bande accordables (par exemple les sources référencées 1-1 à 1-5 du réseau optique de la **figure 4****),** chacun de ces sources mono-bande étant apte à émettre des rafales optiques mono-bandes sur des longueurs d'ondes distinctes.

Chaque source mono-bande 1-1 à 1-5 est équipée d'une source de lumière permettant de générer la bonne longueur d'onde pour une rafale donnée. En l'espèce, chaque source 1-1 à 1-5 est équipée de cinq lasers à cavité externe référencés ECL 1 à ECL 5, lesquels constituent un module de génération optique capable délivrer des signaux optiques associés à des longueurs d'onde distinctes, qui sont chacun suivis d'une porte optique référencée OG 1 à OG 5, dont l'ouverture ou la fermeture peut être géré par un contrôleur commun (non représenté) en fonction de la longueur d'onde à utiliser pour une rafale donnée.

Les sorties des portes optiques référencées OG 1 à OG 5 alimentent un module de combinaison (e.g. un coupleur optique) PM 621 à 625, en sortie duquel on obtient donc une rafale, ou burst, d'un signal continu à la longueur d'onde source de l'un des lasers à cavité externe ECL 1 à ECL 5. Le fait d'utiliser une porte optique (ou OG pour « Optical Gâte ») pour découper temporellement ce signal constitue une alternative intéressante à une source accordable rapidement avec les caractéristiques requises, comme indiqué ci-dessus. Ces sources ECL et ces portes optiques OG peuvent être intégrées dans un circuit intégré photonique appelé PIC (pour « Photonic Integrated Circuit ») référencé 611 à 615. Cet ensemble (entouré en traits mixtes sur la **figure** 6) constitue la source accordable rapidement (au rythme burst), encore appelée TLS pour « Tunable Laser Source », et référencée 601 à 605.

Chaque source 1-1 à 1-5 est aussi équipée d'un dispositif permettant d' « imprimer » (i.e. de moduler) sur le signal optique coloré émis par le groupe TLS les données numériques à transmettre grâce au modulateur complexe PDM-CMZM (pour « Polarization Division Multiplexed - Complex Mach-Zehnder Modulator ») référencé 641 à 645. Une modulation de polarisation peut faire varier le débit transporté par les bandes OFDM. Sur la **figure 6****,** les données à transmettre sont fournies par un dispositif de traitement (ASIC pour Application-Specific Integrated Circuit) appelé « Arbitrary Waveform Generator » ou AWG (pour « Générateur de formes d'onde arbitraire ») référencé 631 à 635.

Chaque source 1-1 à 1-5 peut donc fournir un signal sous forme de bursts de données ayant à la fois des longueurs d'onde différentes et des formats de modulation différents d'un burst à l'autre.

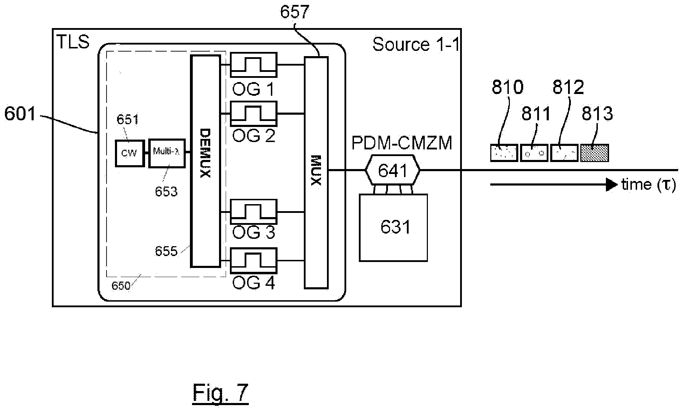

On présente maintenant, en relation avec la **figure 7****,** une variante de l'exemple de réalisation d'une des sources OFDM mono-bande illustrées sur la figure 6 (en l'occurrence la source 1-1, choisie à titre purement illustratif), apte à émettre des rafales optiques mono-bandes sur des longueurs d'ondes distinctes (ici, quatre rafales successives mono-bandes OFDM référencées 810 à 813).

Dans cette variante, au lieu d'utiliser un module de génération optique basé sur cinq lasers à cavité externe, le module de génération optique comprend :
- une unique source optique 651 (typiquement un laser à cavité externe à faible largeur de raie spectrale, de 50 à 100 kHz) générant un signal optique continu,
- un module de génération multi-longueurs d'onde 653 dont l'entrée reçoit le signal optique continu en sortie de la source lumineuse 651 et délivrant en sortie, à partir de ce signal optique continu, un signal optique à N longueurs d'onde (ici, N=4, de manière purement illustrative), autrement dit un signal optique comprenant N composantes associées respectivement à ces N longueurs d'onde. Un tel module peut être implémenté sous la forme d'un modulateur Mach-Zehnder à double attaque sur lequel on envoie un puissance RF élevée à un fréquence égale à l'espacement souhaité des raies optiques, sous la forme d'un laser faible bruit à verrouillage passif de mode à puits quantique, ou encore d'un modulateur de phase inséré dans une cavité Fabry-Pérot, par exemple.
- un démultiplexeur optique 655 dont l'entrée reçoit le signal optique multi-longueurs d'onde en sortie du module de génération multi-longueurs d'onde 653 et disposant de N sorties sur chacune desquelles il délivre séparément les composantes en longueur d'onde du signal multi-longueurs d'onde en entrée.

Dans cette variante, les entrées des N portes optiques OG 1 à OG 5 sont alors connectées aux N sorties du démultiplexeur optique 655, chaque porte optique OG traitant ainsi une seule composante en longueur d'onde du signal optique multi-longueurs d'onde. Les sorties des N portes optiques OG sont connectées aux N entrées d'un multiplexeur optique 657, lequel délivre un signal optique combinant spectralement les composantes optiques présentes en sortie de ces portes optiques.

En opération, dans la mesure où la source 651 fournit un signal continu au module générateur 653 qui le transforme en un signal multi-longueurs d'onde, lui-même démultiplexé par le démultiplexeur 655 vers les N portes optiques OG, ces portes optiques OG reçoivent chacune en continu une composante optique à une longueur d'onde particulière du signal multi-longueurs d'onde. Il suffit qu'une seule de ces portes soit passante (alors que toutes les autres sont bloquantes), pendant un laps de temps suffisamment court, pour obtenir en sortie du multiplexeur optique 657 une rafale, ou burst, sur la longueur d'onde de la composante traitée par la seule porte optique OG passante. L'accordabilité (correspondant au changement de longueur d'onde d'une rafale à la suivante) est ainsi assurée par le contrôle du changement de porte passante (parmi les N portes optiques), d'une première porte optique associée à une première longueur d'onde à utiliser pour une rafale courante à une deuxième porte optique associée à une deuxième longueur d'onde à utiliser pour la rafale suivante. Comme indiqué précédemment, ce contrôle peut être géré par un contrôleur commun (non illustré) contrôlant les différentes portes optiques afin de laisser passer une composante de longueur d'onde différente d'une rafale à une autre.

Dans un autre mode de réalisation reposant sur une plus faible intégration photonique, il est possible de mutualiser les sources ECL, qui sont des composants optiques coûteux, comme représenté sur la **figure 8****.**

Par souci de simplification, on n'a représenté ici que les sources 1-1 et 1-2. Les éléments identiques à ceux de la figure 6 sont identifiés par les mêmes références, et ne sont donc pas décrits ici plus en détail. Comme on peut l'observer, seuls quatre lasers à cavité externe ECL 1 à ECL 4 sont utilisés, et sont mutualisés entre les deux sources 1-1 et 1-2. Pour ce faire, on dispose en sortie de chaque laser ECL 1 à ECL 4 un coupleur optique 50/50 référencé 701 à 704. Chaque coupleur 701 à 704 présente deux sorties, dont l'une est reliée à une porte optique OG1-1 à OG4-1 de la source 1-1 et l'autre est reliée à une porte optique OG1-2 à OG4-2 de la source 1-2.

De cette façon, on peut réduire la consommation énergétique, ainsi que l'encombrement des sources.

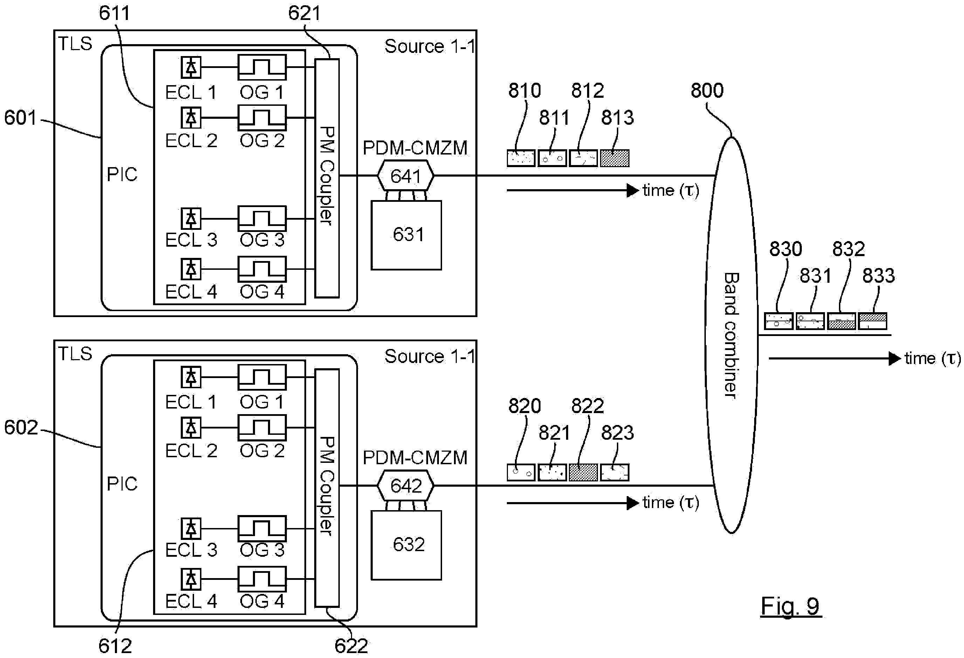

Comme représenté sur la **figure 4****,** le routage dans le réseau optique dans un mode de réalisation de l'invention est assuré sur la base de la longueur d'onde, soit d'une bande OFDM (aux extrémités du réseau), soit d'un signal OFDM multi-bandes dans le cœur du réseau (c'est-à-dire entre le combineur de bandes et le séparateur de bandes). La **figure 9** illustre la fonction réalisée par le combineur de bandes 1 ou 2 de la **figure 4****.** Par souci de simplification, on n'a représenté sur la **figure 9** que deux sources 1-1 et 1-2 dont les rafales de données mono-bandes OFDM sont incidentes sur le combineur de bande 800. Un tel combineur de bandes peut bien sûr assurer la combinaison d'un plus grand nombre de rafales, en provenance de N sources distinctes.

La source 1-1 émet quatre rafales successives mono-bandes OFDM référencées 810 à 813 ; la source 1-2 émet quatre rafales successives mono-bandes OFDM référencées 820 à 823 ; sous réserve que ces rafales parviennent au combineur de bandes 800 de manière parfaitement synchronisée, ce dernier les combine en juxtaposant les bandes spectrales de chacune des rafales pour former des rafales MB-OFDM référencées 830 à 833. Ainsi, la rafale MB-OFDM référencée 830 correspond à la combinaison des rafales référencées 810 en provenance de la source 1-1 et 820 en provenance de la source 1-2, et occupe une bande spectrale de largeur égale à la sommes des largeurs des bandes spectrales des rafales 810 et 820. Le même raisonnement s'applique pour les rafales 831 à 833.

Comme indiqué précédemment en relation avec la **figure 4****,** la gestion des émissions au niveau des sources 1-1 et 1-2 représentées sur la **figure 8** doit faire appel à un plan de commande spécifique tenant compte des temps de trajet entre les sources et le combineur (en plus de la fonction de gestion des contentions au sein du réseau et au niveau des destinations).

Compte tenu des possibilités offertes par l'OFDM multi-bandes, il est également possible de faire varier la bande spectrale utilisée par une source de façon à offrir un degré de liberté supplémentaire dans la flexibilité offerte pour adapter la granularité de la bande passante utilisée à la quantité de données à transporter. Dans ce cas, le combineur de bandes n'est pas à modifier car il peut s'agir d'un coupleur optique qui intrinsèquement n'effectue aucun filtrage spectral. Par contre, au niveau du séparateur de bandes 81, 82 représenté sur la **figure 4****,** il est dans ce cas nécessaire d'effectuer une reconfiguration de la bande passante spectrale filtrée. Le plan de commande doit alors prendre en compte cette dimension et effectuer les actions nécessaires. En particulier, le plan de commande envoie une requête aux séparateurs de bandes 81, 82 afin de leur demander d'adapter leur bande spectrale filtrée à la largeur de la bande optique OFDM à démultiplexer. La reconfiguration de la bande passante spectrale au niveau du séparateur de bande peut se faire à un rythme plus lent qu'au niveau de l'émission. En effet, on peut supposer que pendant une certaine durée, un récepteur (i.e. une destination, ou un nœud destinataire) reçoit des données à un débit (donc à un encombrement spectral) donné, alors qu'au niveau de la source il y a une variation rapide du format de modulation (et donc de la bande spectrale occupée) lorsqu'on génère un burst pour une destination (avec un format et un encombrement spectral donnés) et qu'au burst suivant on émet vers une autre destination avec un autre format de modulation et un autre encombrement spectral.

Pour effectuer une reconfiguration de la bande passante spectrale au niveau du séparateur de bande à un rythme plus rapide, on peut réaliser, sur le même principe qu'à la source, une combinaison de filtres fixes avec des portes optiques rapides.

On s'attache désormais, en relation avec la **figure 10****,** à décrire un exemple de récepteur selon un mode de réalisation de l'invention. Dans le cas d'une solution avec accord à la source, le récepteur est fixe et par conséquent, il doit être capable de détecter les rafales et les traiter à partir d'algorithmes dédiés à la réception de rafales mono-bande OFDM. Le récepteur OFDM mono-bande de la **figure 10** est dédié à la détection d'une seule bande OFDM. Il faut donc autant de récepteurs OFDM qu'il y a de longueurs d'onde acheminées par le réseau. Dans le cas où chaque destination reçoit uniquement une bande OFDM, cela correspond à un récepteur par destination.

Le récepteur est cohérent et utilise la diversité de polarisation pour récupérer les deux polarisations du signal et la diversité de phase pour récupérer les composantes en phase (I) et en quadrature (Q). Ces opérations sont effectuées dans la partie référencée 902 consacrée au traitement analogique du signal. Le traitement du signal numérique est le même que ce qui se fait usuellement en OFDM (partie référencée 901 du récepteur) et la récupération de la synchronisation, qui est une étape intrinsèque au traitement du signal OFDM, permet de détecter le début des rafales. Pour assurer la récupération du décalage de fréquence entre l'oscillateur local et le laser d'émission sur les rafales, il est souhaitable que les lasers à l'émission soient bien stables en longueurs d'onde et bien calés sur les longueurs d'onde ad hoc.

Plus précisément, le signal optique reçu pénètre dans un récepteur cohérent à diversité de polarisation et de phase. Il subit d'abord un démultiplexage en polarisation 920, mettant en œuvre un séparateur de faisceau de polarisation 921 (en anglais PBS pour « Polarization Beam Splitter »). Les deux signaux récupérés sur la polarisation X et Y sont alors mélangés au moyen d'un mélangeur « hybride 90° » avec l'oscillateur local 922, dont la longueur d'onde est identique à la longueur d'onde du laser utilisé à l'émission mais indépendant de ce dernier. Les deux hybrides 90° disposés sur les polarisations X et Y respectivement permettent de séparer la composante en phase I de la composante en quadrature Q, permettant ainsi la détection du signal OFDM.

Les quatre composantes du signal (I et Q sur la polarisation X, I et Q sur la polarisation Y) ainsi obtenues sont filtrées et converties dans le domaine numérique au moyen de quatre convertisseurs analogiques numériques (ADC) dont la bande passante est adaptée à la largeur des bandes OFDM à traiter. Ces quatre ADC peuvent être embarqués sur un ASIC ultra-rapide (par exemple 64 Giga-échantillons/s) ou dans un oscilloscope à échantillonnage ultra-rapide, par exemple.

Le signal numérique obtenu en sortie de l'oscilloscope est alors synchronisé 910 (afin de déterminer le début des symboles OFDM), et le décalage en fréquence du signal après synchronisation est estimé et compensé 911 dans un module de compensation du décalage en fréquence CFO (en anglais « Carrier Frequency Offset Compensation »). Ce décalage en fréquence entre le laser à l'émission et celui à la détection résulte de l'utilisation d'une détection cohérente.

La chaîne de traitement numérique 901 opère ensuite classiquement les traitements suivants sur le signal :
- suppression du préfixe cyclique 912 ;
- transformée de Fourier rapide FFT 913 ;
- estimation de canal et égalisation 914 pour séparer les composantes en polarisation X et Y;
- estimation du bruit de phase et compensation 915 ;
- démodulation 916 ;
- conversion parallèle/série P/S 917, à l'issue de laquelle on récupère les données binaires.

On notera que, dans l'ensemble de ce document, les termes « burst » et « rafale » ont été employés de façon synonyme. De même, les termes « source », « nœud source » ou « émetteur » sont équivalents, ainsi que les termes « destinataire », « récepteur » ou « nœud destinataire ».

## Revendications

1. Système d'émission de données dans un réseau optique comprenant une pluralité de nœuds optiques, qui comprend :
- Une pluralité de nœuds sources (1-1, 1-2, 1-3, 1-4, 1-5), un nœud source étant apte à générer, dans une bande spectrale qui lui est associée, un signal optique multi-porteuse de données de type OFDM obtenu par modulation d'un signal source à une longueur d'onde source, et à émettre ledit signal optique multi-porteuse de données de type OFDM sous forme de rafales de données mono-bandes (11-13, 21-23, 31-33, 41-43, 51-53) pouvant être associées à des longueurs d'onde source distinctes,
**caractérisé en ce qu'**il comprend également :
- au moins une unité de contrôle d'un instant d'émission desdites rafales de données mono-bandes par lesdits nœuds sources, mettant en œuvre un plan de commande tenant compte d'un temps de trajet desdites rafales de données mono-bandes émises par lesdits nœuds sources vers un module de combinaison, de façon que lesdites rafales de données mono-bandes atteignent ledit module de combinaison de manière synchronisée, et
- Un module de combinaison (1, 2) desdites rafales de données mono-bandes, émises par lesdits nœuds sources dans lesdites bandes spectrales qui leur sont associées, en rafales de données multi-bandes (61-63, 71-73), occupant une bande spectrale correspondant à une juxtaposition desdites bandes spectrales associées aux nœuds sources.

2. Système d'émission de données selon la revendication 1, **caractérisé en ce que,** pour un nœud source donné, lesdites rafales de données mono-bandes sont de durées variables.

3. Système d'émission de données selon l'une quelconque des revendications 1 et 2,
**caractérisé en ce que,** pour un nœud source donné, lesdites rafales de données mono-bandes peuvent être associées à des signaux optiques multi-porteuses de données présentant des formats de modulation différents.

4. Système d'émission de données selon l'une quelconque des revendications 1 à 3,
**caractérisé en ce que,** pour un nœud source donné, lesdites rafales de données mono-bandes peuvent être associées à des débits de transmission de données différents.

5. Système d'émission de données selon l'une quelconque des revendications 1 à 4,
**caractérisé en ce que** ladite longueur d'onde source associée à une rafale de données mono-bande est une longueur d'onde dédiée à un nœud destinataire de ladite rafale de données mono-bande.

6. Système d'émission de données selon l'une quelconque des revendications 1 à 5,
**caractérisé en ce que** l'un desdits nœuds sources comprend un laser accordable.

7. Système d'émission de données selon l'une quelconque des revendications 1 à 5,
**caractérisé en ce que** l'un desdits nœuds sources comprend au moins deux lasers à cavité externe (ECL1-ECL5) générant chacun un signal source à une longueur source prédéterminée qui lui est propre, et au moins deux commutateurs optiques aptes à fonctionner en portes optiques (OG1-OG5) en sortie desdits lasers à cavité externe, aptes à découper temporellement lesdits signaux sources.

8. Système d'émission de données selon la revendication 7, **caractérisé en ce que** lesdits lasers à cavité externe sont communs à au moins deux desdits nœuds sources.

9. Système d'émission selon l'une quelconque des revendications 1 à 8, **caractérisé en ce que** ladite bande spectrale associée à l'un desdits nœuds sources est variable.

10. Système d'émission selon l'une quelconque des revendications 1 à 9, dans lequel ledit plan de commande met en œuvre un échange de messages entre lesdits nœuds optiques et ladite au moins une unité de contrôle,
**caractérisé en ce que** ladite au moins une unité de contrôle comprend des moyens de calcul d'une durée desdites rafales de données mono-bandes à partir d'une information de largeur de bande spectrale associée à l'un desdits nœuds sources insérée dans un message échangé entre ledit nœud source et ladite unité de contrôle.

11. Système d'émission selon l'une quelconque des revendications 1 à 9, dans lequel ledit plan de commande met en œuvre un échange de messages entre lesdits nœuds optiques et ladite au moins une unité de contrôle, **caractérisé en ce que** ladite au moins une unité de contrôle comprend des moyens de calcul dudit instant d'émission à partir de paramètres de transmission d'une rafale de données mono-bande par l'un desdits nœuds sources, lesdits paramètres de transmission étant contenus dans au moins certains desdits messages échangés.

12. Système d'émission selon la revendication 9, dans lequel ledit plan de commande met en œuvre un échange de messages entre lesdits nœuds optiques et ladite au moins une unité de contrôle, **caractérisé en ce que,** la largeur de la bande spectrale associée à l'un desdits nœuds sources étant variable, ledit plan de commande comprend des messages de commande à destination d'au moins un nœud intermédiaire du réseau comprenant une information relative à une largeur de bande courante pour ledit nœud source.

13. Procédé d'émission de données dans un réseau optique comprenant une pluralité de nœuds optiques, comprenant :
- Au moins deux étapes de génération, dans deux bandes spectrales indépendantes, d'un signal optique multi-porteuse de données de type OFDM obtenu par modulation d'un signal source à une longueur d'onde source ;
- Au moins deux étapes d'émission dudit signal optique multi-porteuse de données de type OFDM sous forme de rafales de données mono-bandes pouvant être associées à des longueurs d'onde source distinctes ;
**caractérisé en ce qu'**il comprend également :
- Une étape de contrôle d'un instant d'émission desdites rafales de données mono-bandes, mettant en œuvre un plan de commande tenant compte d'un temps de trajet desdites rafales de données mono-bandes, de façon à synchroniser lesdites rafales de données mono-bandes ; et
- Une étape de combinaison desdites rafales de données mono-bandes synchronisées, en rafales de données multi-bandes, occupant une bande spectrale correspondant à une juxtaposition desdites bandes spectrales indépendantes.

14. Réseau optique comprenant au moins un système d'émission de données selon l'une quelconque des revendications 1 à 12 ou 16 à 17, et :
- au moins un nœud cœur (7) de routage passif desdites rafales de données multi-bandes, apte à aiguiller lesdites rafales de données multi-bandes en fonction desdites longueurs d'onde sources associées ;
- au moins un module séparateur de bandes (81, 82), apte à séparer lesdites rafales de données multi-bandes en une pluralité de rafales de données mono-bandes et à aiguiller lesdites rafales de données mono-bandes en fonction de leur longueur d'onde source associée vers un nœud destinataire auquel ladite longueur d'onde source est dédiée ;
- une pluralité de nœuds destinataires (2-1, 2-2, 2-3, 2-4, 2-5) desdites rafales de données mono-bandes.

15. Signal optique apte à être transmis dans un réseau cœur de transport optique,
**caractérisé en ce qu'il** comprend une succession de rafales de données multi-bandes,
une rafale de données multi-bandes correspondant à une combinaison de rafales de données mono-bandes synchronisées émises par une pluralité de nœuds sources dans des bandes spectrales indépendantes,
une rafale de données mono-bande transportant un signal optique multi-porteuse de données de type OFDM obtenu par modulation d'un signal source à une longueur d'onde source,
lesdites rafales de données mono-bandes d'une même bande spectrale pouvant être associées à des longueurs d'onde source distinctes.

16. Système d'émission de données selon l'une quelconque des revendications 1 à 12 dont au moins un nœud comprend une source optique mono-bande accordable (1-1), apte à émettre des rafales optiques mono-bandes associées à des longueurs d'onde source distinctes (810, 811, 812, 813), et formant nœud source du système d'émission de données selon l'une quelconque des revendications 1 à 12, comprenant :
un module de génération optique (650) délivrant une pluralité de signaux optiques associés à une pluralité de longueurs d'onde sources distinctes ;
une pluralité de portes optiques (OG1,OG2,OG3,OG4) recevant respectivement lesdits signaux optiques associés aux différentes longueurs d'onde sources,
un module de combinaison (621,657) combinant les sorties desdites portes optiques ;
un modulateur (641) agencé pour moduler le signal optique en sortie du module de combinaison.

17. Système d'émission de données selon la revendication 16, **caractérisé en ce que** le module de génération optique (650) comprend :
un source optique (651) générant un signal optique continu ;
un module (653) de génération multi-longueurs d'onde agencé pour délivrer, à partir du signal optique continu reçu de la source optique, un signal optique multi-longueurs d'onde, présentant une pluralité de composantes optiques associées respectivement auxdites longueurs d'onde sources distinctes ; et
un démultiplexeur (655) agencé pour séparer le signal optique multi-longueurs d'onde en une pluralité de signaux optiques mono-longueur d'onde correspondant auxdites composantes optiques.

## Patentansprüche

1. Datensendesystem in einem eine Vielzahl von optischen Knoten umfassenden optischen Netzwerk, das umfasst:
- eine Vielzahl von Quellknoten (1-1, 1-2, 1-3, 1-4, 1-5), wobei ein Quellknoten geeignet ist, in einem ihm zugeordneten Spektralband ein optisches Mehrträgerdatensignal vom OFDM-Typ zu erzeugen, das durch Modulation eines Quellsignals mit einer Quellwellenlänge erhalten wird, und das optische Mehrträgerdatensignal vom OFDM-Typ in Form von einbandigen Datenbursts (11-13, 21-23, 31-33, 41-43, 51-53) zu senden, die unterschiedlichen Quellwellenlängen zugeordnet sein können,
**dadurch gekennzeichnet, dass** es ferner umfasst:
- mindestens eine Einheit zur Kontrolle eines Zeitpunkts des Sendens der einbandigen Datenbursts durch die Quellknoten, die eine Steuerungsebene einsetzt, die eine Laufzeit der von den Quellknoten gesendeten einbandigen Datenbursts zu einem Kombinationsmodul berücksichtigt, so dass die einbandigen Datenbursts das Kombinationsmodul synchronisiert erreichen, und
- ein Modul (1, 2) zum Kombinieren der einbandigen Datenbursts, die von den Quellknoten in den ihnen zugeordneten Spektralbändern gesendet werden, zu mehrbandigen Datenbursts (61-63, 71-73), die ein Spektralband einnehmen, das einer Aneinanderreihung der den Quellknoten zugeordneten Spektralbänder entspricht.

2. Datensendesystem nach Anspruch 1, **dadurch gekennzeichnet, dass** die einbandigen Datenbursts bei einem gegebenen Quellknoten variable Dauern aufweisen.

3. Datensendesystem nach einem der Ansprüche 1 und 2, **dadurch gekennzeichnet, dass** die einbandigen Datenbursts bei einem gegebenen Quellknoten optischen Mehrträgerdatensignalen zugeordnet sein können, die unterschiedliche Modulationsformate aufweisen.

4. Datensendesystem nach einem der Ansprüche 1 bis 3, **dadurch gekennzeichnet, dass** die einbandigen Datenbursts bei einem gegebenen Quellknoten unterschiedlichen Datenübertragungsraten zugeordnet sein können.

5. Datensendesystem nach einem der Ansprüche 1 bis 4, **dadurch gekennzeichnet, dass** die einem einbandigen Datenburst zugeordnete Quellwellenlänge eine Wellenlänge ist, die einem Zielknoten des einbandigen Datenbursts dediziert ist.

6. Datensendesystem nach einem der Ansprüche 1 bis 5, **dadurch gekennzeichnet, dass** einer der Quellknoten einen abstimmbaren Laser umfasst.

7. Datensendesystem nach einem der Ansprüche 1 bis 5, **dadurch gekennzeichnet, dass** einer der Quellknoten mindestens zwei Laser mit externem Resonator (ECL1-ECL5) umfasst, die jeweils ein Quellsignal mit einer ihm eigenen vorbestimmten Quellwellenlänge erzeugen, und mindestens zwei optische Switche, die geeignet sind, als optische Gates (OG1-OG5) im Ausgang der Laser mit externem Resonator zu arbeiten, die in der Lage sind, die Quellsignale zeitlich zu zerhacken.

8. Datensendesystem nach Anspruch 7, **dadurch gekennzeichnet, dass** die Laser mit externem Resonator mindestens zweien der Quellknoten gemein sind.

9. Sendesystem nach einem der Ansprüche 1 bis 8, **dadurch gekennzeichnet, dass** das einem der Quellknoten zugeordnete Spektralband variabel ist.

10. Sendesystem nach einem der Ansprüche 1 bis 9, bei dem die Steuerungsebene einen Nachrichtenaustausch zwischen den optischen Knoten und der mindestens einen Kontrolleinheit einsetzt,
**dadurch gekennzeichnet, dass** die mindestens eine Kontrolleinheit Einrichtungen umfasst zum Berechnen einer Dauer der einbandigen Datenbursts anhand einer Information zur spektralen Bandbreite, die einem der Quellknoten zugeordnet ist, die in eine Nachricht eingefügt ist, die zwischen dem Quellknoten und der Kontrolleinheit ausgetauscht wird.

11. Sendesystem nach einem der Ansprüche 1 bis 9, bei dem die Steuerungsebene einen Nachrichtenaustausch zwischen den optischen Knoten und der mindestens einen Kontrolleinheit einsetzt, **dadurch gekennzeichnet, dass** die mindestens eine Kontrolleinheit Einrichtungen zum Berechnen des Zeitpunkts des Sendens eines einbandigen Datenbursts durch einen der Quellknoten anhand von Übertragungsparametern umfasst, wobei die Übertragungsparameter in mindestens einigen der ausgetauschten Nachrichten enthalten sind.

12. Sendesystem nach Anspruch 9, bei dem die Steuerungsebene einen Nachrichtenaustausch zwischen den optischen Knoten und der mindestens einen Kontrolleinheit einsetzt, **dadurch gekennzeichnet, dass**, wenn die einem der Quellknoten zugeordnete spektrale Bandbreite variabel ist, die Steuerungsebene an mindestens einen Zwischenknoten des Netzwerks gerichtete Steuerungsnachrichten umfasst, die eine Information über eine aktuelle Bandbreite für den Quellknoten umfassen.

13. Datensendeverfahren in einem eine Vielzahl von optischen Knoten umfassenden optischen Netzwerk, umfassend:
- mindestens zwei Schritte des Erzeugens, in zwei unabhängigen Spektralbändern, eines optischen Mehrträgerdatensignals vom OFDM-Typ, das durch Modulation eines Quellsignals mit einer Quellwellenlänge erhalten wird;
- mindestens zwei Schritte des Sendens des optischen Mehrträgerdatensignals vom OFDM-Typ in Form von einbandigen Datenbursts, die unterschiedlichen Quellwellenlängen zugeordnet sein können;
**dadurch gekennzeichnet, dass** es auch umfasst:
- einen Schritt des Kontrollierens eines Zeitpunkts des Sendens der einbandigen Datenbursts, der eine Steuerungsebene einsetzt, die eine Laufzeit der einbandigen Datenbursts berücksichtigt, so dass die einbandigen Datenbursts synchronisiert werden; und
- einen Schritt des Kombinierens der synchronisierten einbandigen Datenbursts zu mehrbandigen Datenbursts, die ein Spektralband einnehmen, das einer Aneinanderreihung der unabhängigen Spektralbänder entspricht.

14. Optisches Netzwerk, das mindestens ein Datensendesystem nach einem der Ansprüche 1 bis 12 oder 16 bis 17 umfasst und:
- mindestens einen Core-Knoten (7) zum passiven Routen der mehrbandigen Datenbursts, der geeignet ist, die mehrbandigen Datenbursts in Abhängigkeit von den zugeordneten Quellwellenlängen zu leiten;
- mindestens ein Bandsplittermodul (81, 82), das geeignet ist, die mehrbandigen Datenbursts in eine Vielzahl von einbandigen Datenbursts zu splitten und die einbandigen Datenbursts in Abhängigkeit von ihrer zugeordneten Quellwellenlänge zu einem Zielknoten zu leiten, dem die Quellwellenlänge dediziert ist;
- eine Vielzahl von Zielknoten (2-1, 2-2, 2-3, 2-4, 2-5) der einbandigen Datenbursts.

15. Optisches Signal, das geeignet ist, in einem optischen Core-Transportnetz übertragen zu werden, **dadurch gekennzeichnet, dass** es eine Folge von mehrbandigen Datenbursts umfasst, wobei ein mehrbandiger Datenburst einer Kombination von synchronisierten einbandigen Datenbursts entspricht, die von einer Vielzahl von Quellknoten in unabhängigen Spektralbändern gesendet werden,
wobei ein einbandiger Datenburst ein optisches Mehrträgerdatensignal vom OFDM-Typ transportiert, das durch Modulation eines Quellsignals mit einer Quellwellenlänge erhalten wird,
wobei die einbandigen Datenbursts desselben Spektralbandes unterschiedlichen Quellwellenlängen zugeordnet sein können.

16. Datensendesystem nach einem der Ansprüche 1 bis 12, bei dem mindestens einer seiner Knoten eine abstimmbare einbandige optische Quelle (1-1) umfasst, die geeignet ist, einbandige optische Bursts zu senden, die unterschiedlichen Quellwellenlängen zugeordnet sind (810, 811, 812, 813), und einen Quellknoten des Datensendesystems nach einem der Ansprüche 1 bis 12 bildet, umfassend:
ein optisches Erzeugungsmodul (650), das eine Vielzahl von optischen Signalen ausgibt, die einer Vielzahl von unterschiedlichen Quellwellenlängen zugeordnet sind;
eine Vielzahl von optischen Gates (OG1, OG2, OG3, OG4), die jeweils die den verschiedenen Quellwellenlängen zugeordneten optischen Signale empfangen, wobei ein Kombinationsmodul (621, 657) die Ausgänge der optischen Gates kombiniert;
einen Modulator (641), der dazu eingerichtet ist, das optische Signal im Ausgang des Kombinationsmoduls zu modulieren.

17. Datensendesystem nach Anspruch 16, **dadurch gekennzeichnet, dass** das optische Erzeugungsmodul (650) umfasst:
eine optische Quelle (651), die ein kontinuierliches optisches Signal erzeugt;
ein Mehrwellenlängen-Erzeugungsmodul (653), das dazu eingerichtet ist, anhand des von der optischen Quelle empfangenen kontinuierlichen optischen Signals ein optisches Mehrwellenlängensignal auszugeben, aufweisend eine Vielzahl von optischen Komponenten, die jeweils den unterschiedlichen Quellwellenlängen zugeordnet sind; und
einen Demultiplexer (655), der dazu eingerichtet ist, das optische Mehrwellenlängensignal in eine Vielzahl von optischen Einwellenlängensignalen zu splitten, die den optischen Komponenten entsprechen.

## Claims

1. System for transmitting data through an optical network comprising a plurality of optical nodes, which comprises:
- a plurality of source nodes (1-1, 1-2, 1-3, 1-4, 1-5), a source node being able to generate, in a spectral band that is associated therewith, an OFDM multi-carrier optical data signal obtained by modulating a source signal at a source wavelength, and to transmit said OFDM multi-carrier optical data signal in the form of single-band data bursts (11-13, 21-23, 31-33, 41-43, 51-53) able to be associated with distinct source wavelengths,
**characterized in that** it also comprises:
- at least one unit for controlling a time of transmission of said single-band data bursts by said source nodes, employing a control plan taking into account a path time of said single-band data bursts transmitted by said source nodes to a combining module, so that said single-band data bursts reach said combining module synchronously, and
- a module (1, 2) for combining said single-band data bursts, transmitted by said source nodes in said spectral bands that are associated therewith, into multi-band data bursts (61-63) occupying a spectral band corresponding to a juxtaposition of said spectral bands associated with the source nodes.

2. System for transmitting data according to Claim 1,
**characterized in that,** for a given source node, said single-band data bursts are of variable duration.

3. System for transmitting data according to either one of Claims 1 and 2, **characterized in that,** for a given source node, said single-band data bursts may be associated with multi-carrier optical data signals having different modulation formats.

4. System for transmitting data according to any one of Claims 1 to 3, **characterized in that,** for a given source node, said single-band data bursts may be associated with different data transmission rates.

5. System for transmitting data according to any one of Claims 1 to 4, **characterized in that,** said source wavelength associated with a single-band data burst is a wavelength dedicated to a recipient node of said single-band data burst.

6. System for transmitting data according to any one of Claims 1 to 5, **characterized in that,** one of said source nodes comprises a tunable laser.

7. System for transmitting data according to any one of Claims 1 to 5, **characterized in that,** one of said source nodes comprises at least two external-cavity lasers (ECL1-ECL5) that each generate a source signal at a preset source wavelength that is specific thereto, and at least two optical switches that are able to operate as optical gates (OG1-OG5) at the output of said external-cavity lasers, said gates being able to time slice said source signals.

8. System for transmitting data according to Claim 7,
**characterized in that,** said external-cavity lasers are common to at least two of said source nodes.

9. Transmitting system according to any one of Claims 1 to 8, **characterized in that,** said spectral band associated with one of said source nodes is variable.

10. Transmitting system according to any one of Claims 1 to 9, in which said control plan employs an exchange of messages between said optical nodes and said at least one control unit,
**characterized in that** said at least one control unit comprises means for computing a duration of said single-band data bursts from spectral bandwidth information associated with one of said source nodes, which information is inserted into a message exchanged between said source node and said control unit.

11. Transmitting system according to any one of Claims 1 to 9, in which said control plan employs an exchange of messages between said optical nodes and said at least one control unit, **characterized in that** said at least one control unit comprises means for computing said transmission time from parameters of transmission of a single-band data burst by one of said source nodes, said transmission parameters being contained in at least some of the said exchange messages.

12. Transmitting system according to Claim 9, in which said control plan employs an exchange of messages between said optical nodes and said at least one control unit, **characterized in that,** the width of the spectral band associated with one of said source nodes being variable, said control plan comprises control messages intended for at least one intermediate node of the network containing information on a current bandwidth for said source node.

13. Method for transmitting data through an optical network comprising a plurality of optical nodes, comprising:
- at least two steps of generating, in two independent spectral bands, an OFDM multi-carrier optical data signal obtained by modulating a source signal at a source wavelength;
- at least two steps of transmitting said OFDM multi-carrier optical data signal in the form of single-band data bursts able to be associated with distinct source wavelengths;
**characterized in that** it also comprises:
- a step of controlling a transmission time of said single-band data bursts, employing a control plan taking into account a path time of said single-band data bursts, so as to synchronize said single-band data bursts; and
- a step of combining said synchronized single-band data bursts into multi-band data bursts that occupy a spectral band corresponding to a juxtaposition of said independent spectral bands.

14. Optical network comprising at least one system for transmitting data according to any one of Claims 1 to 12 or 16 to 17, and:
- at least one core node (7) for passively routing said multi-band data bursts, said node being able to route said multi-band data bursts depending on said associated source wavelengths;
- at least one band splitter module (81, 82) that is able to split said multi-band data bursts into a plurality of single-band data bursts and to route said single-band data bursts depending on their associated source wavelength to a recipient node to which said source wavelength is dedicated;
- a plurality of recipient nodes (2-1, 2-2, 2-3, 2-4, 2-5) that are intended to receive said single-band data bursts.

15. Optical signal able to be transmitted through an optical transport core network, **characterized in that** it comprises a succession of multi-band data bursts, a multi-band data burst corresponding to a combination of synchronized single-band data bursts transmitted by a plurality of source nodes in independent spectral bands,
a single-band data burst transporting an OFDM multi-carrier optical data signal obtained by modulating a source signal at a source wavelength,
said single-band data bursts of a given spectral band being able to be associated with distinct source wavelengths.

16. System for transmitting data according to any one of Claims 1 to 12, at least one node of which comprises a tunable single-band optical source (1-1) that is able to emit single-band optical bursts associated with distinct source wavelengths (810, 811, 812, 813) and that forms a source node of the system for transmitting data according to any one of Claims 1 to 12, comprising:
an optical generating module (650) that delivers a plurality of optical signals associated with a plurality of distinct source wavelengths;
a plurality of optical gates (OG1, OG2, OG3, OG4) that respectively receive said optical signals associated with the various source wavelengths;
a combining module (621, 657) that combines the outputs of said optical gates;
a modulator (641) arranged to modulate the optical signal output from the combining module.

17. System for transmitting data according to Claim 16, **characterized in that** the optical generating module (650) comprises:
an optical source (651) that generates a continuous-wave optical signal;
a module (653) for generating multiple wavelengths, said module being arranged to deliver, from the continuous-wave optical signal received from the optical source, a multi-wavelength optical signal having a plurality of optical components that are respectively associated with said distinct source wavelengths; and
a demultiplexer (655) arranged to split the multi-wavelength optical signal into a plurality of single-wavelength optical signals corresponding to said optical components.
